(19) Europäisches Patentamt / European Patent Office / Office européen des brevets

(11) **EP 4 393 879 A1**

(12) **EUROPEAN PATENT APPLICATION**
published in accordance with Art. 153(4) EPC

(43) Date of publication:
**03.07.2024  Bulletin 2024/27**

(21) Application number: **22883154.1**

(22) Date of filing: **30.05.2022**

(51) International Patent Classification (IPC):
**C01B 39/02** (2006.01)     **B01D 53/04** (2006.01)
**B01D 53/047** (2006.01)    **B01D 53/62** (2006.01)
**B01J 20/18** (2006.01)

(52) Cooperative Patent Classification (CPC):
**B01D 53/04; B01D 53/047; B01D 53/62;
B01J 20/18; C01B 39/02**

(86) International application number:
**PCT/JP2022/021932**

(87) International publication number:
**WO 2023/067841 (27.04.2023 Gazette 2023/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.10.2021  JP 2021173419**

(71) Applicant: **Asahi Kasei Kabushiki Kaisha
Tokyo 1000006 (JP)**

(72) Inventors:
- **OKUBO, Atsushi**
  **Tokyo 100-0006 (JP)**
- **MAEDA, Saya**
  **Tokyo 100-0006 (JP)**
- **AKAOGI, Takayuki**
  **Tokyo 100-0006 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **GIS-TYPE ZEOLITE, ADSORBENT, AND SEPARATION METHOD**

(57)    A GIS-type zeolite having a silica/alumina ratio of 3.40 or more, in which, when area intensities of peaks assigned to Q4(3Al), Q4(2Al), Q4(1Al) and Q4(0Al) observed in a $^{29}$Si-MAS-NMR spectrum are respectively defined as a, b, c and d, $(a + d)/(b + c) \geq 0.192$ is satisfied.

[Figure 1]

## Description

Technical Field

The present invention relates to a GIS-type zeolite, an adsorbing material, and a separation method.

Background Art

Zeolite can be used for adsorbents, desiccants, separating agents, catalysts, catalyst carriers, detergent aids, ion exchangers, wastewater treatment agents, fertilizers, food additives, cosmetic additives and the like, and, in particular, is useful in gas separation applications.

A zeolite having a GIS structure in codes for directing zeolite structures specified by the IZA (International Zeolite Association) is called a GIS-type zeolite. A GIS-type zeolite is a zeolite having a pore constituted by an oxygen 8-membered ring. Such a GIS-type zeolite is described in, for example, each of Patent Literatures 1 to 4 and Non-Patent Literatures 1 to 7.

Patent Literature 1 describes synthesis of a GIS-type zeolite for effective use of slag of coal burnt ash, and Patent Literature 2 describes an enhancement in thermal conductivity by formation of a zeolite film (GIS-type zeolite) on the surface of an aluminum plate. Non-Patent Literatures 1, 2 and 3 each show a GIS-type zeolite of silica-alumina, and almost no adsorption of carbon dioxide is found in all the reports. Non-Patent Literature 4 discloses a GIS-type zeolite of silicoaluminophosphate containing phosphoric acid, and there is found not only adsorption of carbon dioxide, but also adsorption of oxygen, nitrogen and methane. The amount of adsorption of carbon dioxide cannot be said to be sufficient. Non-Patent Literatures 5 and 6 also each show a GIS-type zeolite of silica-alumina, but do not mention any adsorption performance of carbon dioxide and the like. Patent Literatures 3 and 4 each show a GIS-type zeolite having a crystal structure adjusted, the GIS-type zeolite, although has adsorption ability of carbon dioxide, cannot be said to have a sufficient amount of adsorption of carbon dioxide, and the Literatures do not mention any adsorption-desorption hysteresis in an adsorption-desorption isotherm of carbon dioxide. Non-Patent Literature 7 shows a GIS-type zeolite whose cation is substituted with any of Li, Na, K, Rb and Cs and the zeolite has adsorption ability of carbon dioxide, but an adsorption-desorption hysteresis is observed in an adsorption-desorption isotherm of carbon dioxide.

Citation List

Patent Literatures

Patent Literature 1: Japanese Patent Laid-Open No. 06-340417
Patent Literature 2: National Publication of International Patent Application No. 2012-519148
Patent Literature 3: International Publication No. WO2018/110559
Patent Literature 4: International Publication No. WO2019/202933

Non-Patent Literatures

Non-Patent Literature 1: Matthew D. Oleksiak, Arian Ghorbanpour, Marlon T. Conato, B. Peter McGrail, Lars C. Grabow, Radha Kishan Motkuri, Jeffrey D. Rimer "Synthesis Strategies for Ultrastable Zeolite GIS Polymorphs as Sorbents for Selective Separations" Chem. Eur. J. 2016, 22, 16078-16088.
Non-Patent Literature 2: Pankaj Sharma, Jeong-gu Yeo, Moon Hee Han, Churl Hee Cho "Knobby surfaced, mesoporous, single-phase GIS-NaP1 zeolite microsphere synthesis and characterization for H2 gas adsorption" J. Mater. Chem. A, 2013, 1, 2602-2612.
Non-Patent Literature 3: Pankaj Sharma, Jeong-gu Yeo, Moon Hee Han, Churl Hee Cho "GIS-NaP1 zeolite microspheres as potential water adsorption material: Influence of initial silica concentration on adsorptive and physical/topological properties" Sci. Rep. 2016, 6, 1-26.
Non-Patent Literature 4: Arturo J. Hernandez-Maldonado, Ralph T. Yang, Daniel Chinn, Curtis L. Munson. "Partially Calcined Gismondine Type Silicoaluminophosphate SAPO-43: Isopropylamine Elimination and Separation of Carbon Dioxide, Hydrogen Sulfide, and Water" Langmuir 2003, 19, 2193-2200.
Non-Patent Literature 5: Johann Kecht, B. Mihailova, K. Karaghiosoff, S. Mintova, and Thomas Bein. "Nanosized Gismondine Grown in Colloidal Precursor Solutions" Langmuir 2004, 20, 5271-5276.

Non-Patent Literature 6: Ulf Hakansson, Lars Falth, Staffan Hansen "Structure of a High-Silica Variety of Zeolite Na-P" Acta Cryst. (1990). C46, 1363-1364.
Non-Patent Literature 7: Hyun June CHOI, Jung Gi Min, Sang Hyun Ahn, Jiho Shin, Suk Bong Hong, Sambhu Radhakrishnan, C. Vinod Chandran, Robert G. Bell, Eric Breynaert and Christine E. A. Kirschhock "Framework flexibility-driven CO2 adsorption on a zeolite" Mater. Horiz., 2020, 1528-1532

Summary of Invention

Technical Problem

Focusing on the carbon dioxide adsorption ability of a GIS-type zeolite, for example, if carbon dioxide can be selectively removed from natural gas, industrial value thereof will be significant. If carbon dioxide can be selectively removed from exhaust gas from a power plant and/or a steel plant, the amount of emission of carbon dioxide can also be reduced.

In a case where carbon dioxide is separated, recovered, and purified with an adsorbing material, a pressure swing-type adsorption-separation method, a temperature swing-type adsorption-separation method, a pressure/temperature swing-type adsorption-separation method, or the like is used, and the adsorbing material is demanded to have performances including a large amount of adsorption of carbon dioxide, selective adsorption of carbon dioxide, a high selectivity against a gas subjected to separation, and no adsorption-desorption hysteresis of carbon dioxide. "Adsorption-desorption hysteresis" means a phenomenon in which a hysteresis in adsorption and desorption occurs in an adsorption-desorption isotherm of carbon dioxide, and it is important in use of an adsorbing material that the amount of adsorption in adsorption and the amount of desorption in reproduction be large in a step of desorbing/reproducing carbon dioxide by heating and/or vacuuming. An increase in adsorption-desorption hysteresis leads to a decrease in amount of adsorption in adsorption and accordingly a decrease in amount of desorption in reproduction, and thus is hardly said to be a desirable characteristic in use as an adsorbing material.

Patent Literatures 1 to 2 have not mentioned any adsorption of carbon dioxide by zeolite, and it is hardly said according to the structure analysis results in such Literatures that a crystal structure necessary for selective adsorption of carbon dioxide is clearly formed. That is, it is considered that the zeolite described in Patent Literatures 1 to 2 is not sufficient in adsorption ability of carbon dioxide.

The zeolite described in Non-Patent Literatures 1 to 2 provides no adsorption of carbon dioxide, and cannot separate carbon dioxide from molecules larger in molecular size than carbon dioxide, such as oxygen, nitrogen, and methane, by adsorption and/or gas penetration. As the reason for this, it is considered that an 8-membered ring in GIS-type zeolite is distorted and has elliptical shape where the length of the longer axis is 4.5 Å and the length of the shorter axis is 3.1 Å, and a carbon dioxide molecule having an average molecular size of 3.3 Å cannot easily penetrate into a pore. Non-Patent Literature 3 discloses a GIS-type zeolite of silicoaluminophosphate, in which the binding distance and the binding angle are different from those of silica-alumina, thus the 8-membered ring pore is slightly large and adsorption of carbon dioxide is observed, but the amount of adsorption cannot be said to be sufficiently high, adsorption of oxygen, nitrogen, and methane cannot be said to be sufficiently less, and the selectivity is lowered in separation from carbon dioxide. With reference to Non-Patent Literatures 5 and 6, it has been found according to analysis of a zeolite synthesized according to the descriptions of Patent Literatures 5 and 6, as made by the present inventor, that no formation of any suitable structure can be observed in $^{29}$Si-NMR and no carbon dioxide adsorption performance of a GIS-type zeolite can be exhibited.

Meanwhile, Patent Literatures 3 and 4 provide GIS-type zeolites respectively having amounts of adsorption of carbon dioxide of up to 52.4 cc/g and 67.5 cc/g by optimization of crystal structures of the GIS-type zeolites, but such amounts are hardly said to be sufficient from the viewpoint of gas separation recovery and these Literatures have not mentioned any adsorption-desorption hysteresis. Non-Patent Literature 7 shows a GIS-type zeolite in which a cation in the zeolite is substituted with any of Li, Na, K, Rb and Cs, and provides a GIS-type zeolite having an amount of adsorption of carbon dioxide of up to 82.9 cc/g, but an adsorption-desorption hysteresis is observed in an adsorption-desorption isotherm of carbon dioxide.

An object of the present invention is to provide a GIS-type zeolite having a small adsorption-desorption hysteresis in an adsorption-desorption isotherm of carbon dioxide, an adsorbing material including the GIS-type zeolite, and a separation method using the GIS-type zeolite.

Solution to Problem

The present inventors have made intensive studies in order to solve the above problems, and as a result, have found that the above problems can be solved in a case where the silica/alumina ratio of a GIS-type zeolite is within a predetermined range and the ratio of specific spectral area intensities in a spectrum obtained by subjecting the zeolite

to $^{29}$Si-MAS-NMR measurement is within a predetermined value range, leading to completion of the present invention.

Thus, the present invention is as follows.

[1] A GIS-type zeolite, having a silica/alumina ratio of 3.40 or more, wherein
when area intensities of peaks assigned to Q4(3Al), Q4(2Al), Q4(1Al) and Q4(0Al) observed in a $^{29}$Si-MAS-NMR spectrum are respectively defined as a, b, c and d, (a + d)/(b + c) $\geq$ 0.192 is satisfied.
[2] The GIS-type zeolite according to [1], including potassium as cationic species in the zeolite.
[3] The GIS-type zeolite according to [2], wherein a ratio (K/Al) of an atomic percentage of potassium to an atomic percentage of aluminum in the zeolite is 0.05 or more.
[4] The GIS-type zeolite according to any one of [1] to [3], wherein a ratio (A/T) of a total value (A) of amount of substance of potassium and lithium to a total value (T) of amount of substance of alkali metals in the zeolite is 0.05 or more.
[5] The GIS-type zeolite according to any of [1] to [4], having a carbon atom content of 4% by mass or less.
[6] The GIS-type zeolite according to any of [1] to [5], including silica-alumina.
[7] An adsorbing material including the GIS-type zeolite according to any of [1] to [6].
[8] A separation method including separating one or more selected from the group consisting of $CO_2$, $H_2O$, He, Ne, $Cl_2$, $NH_3$, and HCl from a mixture including two or more gases selected from the group consisting of $H_2$, $N_2$, $O_2$, Ar, CO, and hydrocarbon, by use of the adsorbing material according to [7].
[9] The separation method according to [8], wherein the gas separation is performed by a pressure swing-type adsorption-separation method, a temperature swing-type adsorption-separation method, or a pressure/temperature swing-type adsorption-separation method.

Advantageous Effect of Invention

The present invention can provide a GIS-type zeolite having a small adsorption-desorption hysteresis in an adsorption-desorption isotherm of carbon dioxide, an adsorbing material including the GIS-type zeolite, and a separation method using the GIS-type zeolite.

Brief Description of Drawings

[Figure 1] Figure 1 is $^{29}$Si-MAS-NMR diagram of a GIS-type zeolite obtained in Example 1.
[Figure 2] Figure 2 illustrates a diagram of an adsorption isotherm and a desorption isotherm of carbon dioxide of a GIS-type zeolite obtained in Comparative Example 1.
[Figure 3] Figure 3 is a view exemplifying an adsorbing material according to one embodiment of the present invention.

Description of Embodiments

Hereinafter, an embodiment for carrying out the present invention (hereinafter, referred to as "the present embodiment".) will be described in detail. The present invention is not limited to the following description, and can be variously modified and carried out within the gist thereof.

A GIS-type zeolite of the present embodiment is a GIS-type zeolite having a silica/alumina ratio of 3.40 or more, in which, when the area intensities of peaks assigned to Q4(3Al), Q4(2Al), Q4(1Al) and Q4(0Al) observed in a $^{29}$Si-MAS-NMR spectrum are respectively defined as a, b, c and d, (a + d)/(b + c) $\geq$ 0.192 is satisfied (hereinafter, sometimes used to mean X = a + d, Y = b + c, and Z = X/Y). The GIS-type zeolite exhibits a small adsorption-desorption hysteresis in an adsorption-desorption isotherm of carbon dioxide. The GIS-type zeolite exhibits a sufficiently large amount of adsorption of carbon dioxide, and can adsorb carbon dioxide at a high selectivity in separation of carbon dioxide and gaseous species such as nitrogen and methane.

The present invention can provide a GIS-type zeolite, in which the binding modes of Si and Al present in a zeolite framework are controlled, which thus exhibits a small adsorption-desorption hysteresis in an adsorption-desorption isotherm of carbon dioxide and furthermore a sufficiently large in amount of adsorption of carbon dioxide and can selectively adsorb only carbon dioxide in separation of carbon dioxide and gaseous species such as nitrogen and methane. The binding modes of Si and Al have an influence on the change in structure of the zeolite framework itself in adsorption-desorption. For example, if the change in structure due to adsorption of an adsorbate occurs, energy is taken for the change in structure itself in adsorption and an adsorption-desorption hysteresis is observed. If the change in structure is too poor, a sufficient space, where an adsorbate can adsorb, cannot be obtained and thus the amount of adsorption is smaller. Furthermore, the change in structure also has an influence on pores, and thus also contributes to selectivity in separation of carbon dioxide and gaseous species such as nitrogen and methane.

The silica/alumina ratio (which represents the molar ratio of silica and alumina, represented by $SiO_2/Al_2O_3$, and which is hereinafter also referred to as "SAR") in the GIS-type zeolite according to the present embodiment is 3.40 or more. As the SAR is lower, the zeolite is more hydrophilic and has a stronger adsorption force of a polar molecule such as carbon dioxide. A higher SAR is more preferred because a lower SAR causes a so strong adsorption force that energy necessary for desorption by heating or vacuuming is larger. The SAR is more preferably 4.40 or more, further preferably 4.80 or more. While the upper limit of the SAR is not particularly limited, a too high SAR leads to small interaction with an adsorbate and thus the SAR is preferably 3000 or less, more preferably 500 or less, further preferably 100 or less. The SAR can be calculated from the area intensities in a spectrum obtained by $^{29}$Si-MAS-NMR measurement of the zeolite. The method for measuring the SAR is more specifically a method shown in Examples.

While the SAR is preferably higher from the viewpoint of the energy necessary for desorption, it is established that, when the SAR in the GIS-type zeolite is higher, an adsorption-desorption hysteresis in an adsorption-desorption isotherm of carbon dioxide is enhanced. In the GIS-type zeolite of the present embodiment, the binding modes of Si and Al in the zeolite framework can be controlled to eliminate an adsorption-desorption hysteresis in an adsorption-desorption isotherm of carbon dioxide. Specifically, when the area intensities of peaks assigned to Q4(3Al), Q4(2Al), Q4(1Al) and Q4(0Al) observed in a $^{29}$Si-MAS-NMR spectrum are respectively defined as a, b, c and d, and X = a + d, Y = b + c, and Z = X/Y are defined, $Z \geq 0.192$ is preferably satisfied, $0.913 \geq Z \geq 0.195$ is more preferably satisfied, and $0.519 \geq Z \geq 0.199$ is further preferably satisfied. The peaks including Q4(3Al), Q4(2Al), Q4(1Al) and Q4(0Al) observed in a $^{29}$Si-MAS-NMR spectrum represent the binding modes of Si and Al in the zeolite framework, each of X and Y, representing the sum of the area intensities, represents the sum of the amounts of presence of the binding modes, and Z represents the abundance ratio. The abundance ratio of the binding modes of Si and Al has an influence on the change in structure of the zeolite framework itself at each time of adsorption and desorption, and thus "Z" as the abundance ratio of the binding modes of Si and Al in the zeolite framework can be within an appropriate range to eliminate an adsorption-desorption hysteresis in an adsorption-desorption isotherm.

A $^{29}$Si-MAS-NMR spectrum is obtained by preparing a desiccator where water is put on the bottom, retaining the zeolite placed in a sample tube, on the upper portion in the desiccator at room temperature (25°C) for 48 hours, in order to perform humidity conditioning treatment, and thereafter performing measurement with a solid-state NMR measurement apparatus. Examples of the solid-state NMR measurement apparatus include "RESONANCE ECA700" manufactured by JEOL Ltd. (magnetic field intensity: 16.44 T (resonant frequency at $^1$H: 700 MHz)).

The GIS-type zeolite of the present embodiment generally shows the following five peaks in a $^{29}$Si-MAS-NMR spectrum.

(1) Q4(0Al): peak assigned to Si not bound with any Al via oxygen
(2) Q4(1Al): peak assigned to Si bound with one Al atom via oxygen
(3) Q4(2Al): peak assigned to Si bound with two Al atoms via oxygen
(4) Q4(3Al): peak assigned to Si bound with three Al atoms via oxygen
(5) Q4(4Al): peak assigned to Si bound with four Al atoms via oxygen

The peak positions in a $^{29}$Si-MAS-NMR spectrum are generally present at -112 ppm to -80 ppm, and can be assigned to Q4(0Al), Q4(1Al), Q4(2Al), Q4(3Al), or Q4(4A1) from the high magnetic field side. While the peak positions can be changed depending on cationic species present in the zeolite framework, the peak positions are generally present in the following ranges.

(1) Q4(0Al): -105 ppm to -112 ppm
(2) Q4(1Al): -100 ppm to -105 ppm
(3) Q4(2Al): -95 ppm to -100 ppm
(4) Q4(3Al): -87 ppm to -95 ppm
(5) Q4(4Al): -80 ppm to -87 ppm

The area intensities of the peaks in a $^{29}$Si-MAS-NMR spectrum are obtained by analysis with Gauss and Lorenz functions by use of analysis program dmfit (#202000113 version), and optimization calculation of four parameters of the amplitude (the height of the maximum value in the spectrum), the position (each position in the spectrum, ppm), the width (the full width at half maximum in the spectrum, ppm), and the Gauss/Lorenz ratio ($xG/(1 - x)L$), according to the algorithm of the least squares method.

The area intensities of peaks obtained by the calculation are used to determine the area intensities a, b, c, and d of peaks assigned to Q4(3Al), Q4(2Al), Q4(1Al), and Q4(0Al), and the sums thereof, X and Y, as well as the ratio thereof, Z.

In the present embodiment, the GIS-type zeolite preferably includes silica-alumina from the viewpoint of allowing the selective adsorption ability of carbon dioxide to be more enhanced.

The GIS-type zeolite of the present embodiment preferably includes silica and alumina as main components (80% by mass or more). Such main components are components included at a proportion of 80% by mass or more.

The content of aluminum in the GIS-type zeolite of the present embodiment is preferably 1% by mass or more, more preferably 3% by mass or more, further preferably 5% by mass or more. The upper limit of the content of aluminum is not particularly limited as long as the SAR satisfies the predetermined range described above, and is determined by the content of silica and the value of the SAR.

The content of silicon in the GIS-type zeolite of the present embodiment is preferably 3% by mass or more, more preferably 5% by mass or more. The upper limit of the content of silicon is not particularly limited as long as the SAR satisfies the predetermined range described above, and is determined by the content of alumina and the value of the SAR.

The content of phosphorus in the GIS-type zeolite of the present embodiment is preferably 4% by mass or less. The lower limit of the content of phosphorus is not particularly limited, and may be 0% by mass or more.

The content of Zr in the GIS-type zeolite of the present embodiment is preferably 8% by mass or less. The lower limit of the content of Zr is not particularly limited, and may be 0% by mass or more.

The content of Ti in the GIS-type zeolite of the present embodiment is preferably 8% by mass or less. The lower limit of the content of Ti is not particularly limited, and may be 0% by mass or more.

The phosphorus atom content in the GIS-type zeolite of the present embodiment is more preferably 1.5% by mass or less, particularly preferably 0% by mass from the viewpoint of allowing the selective adsorption ability of carbon dioxide to be more enhanced.

The contents of aluminum, silicon, phosphorus, Zr and Ti can be measured by a method described in Examples below. In addition, the contents of aluminum, silicon, phosphorus, Zr and Ti can be adjusted within the above ranges by, for example, adjusting the compositional ratio of a mixed gel for use in synthesis of the GIS-type zeolite within preferable ranges described below.

The carbon atom content based on the total amount of the GIS-type zeolite is preferably 4% by mass or less, more preferably 3% by mass or less, further preferably 2% by mass or less. The carbon atom content can be measured by CHN elemental analysis. The carbon atom content can be measured to quantitatively determine the amount of an organic structure-directing material or an altered substance thereof. While an organic structure-directing material can be used during synthesis in the GIS-type zeolite of the present embodiment, such an organic structure-directing material may remain in pores and fill space into which carbon dioxide enters, thereby causing the amount of adsorption of carbon dioxide to be smaller, and thus is preferably used in a smaller amount as described above.

The cationic species contained in the GIS-type zeolite is preferably potassium or lithium, more preferably potassium, from the viewpoint of an enhancement in selective adsorption ability of carbon dioxide. The total content of potassium and lithium in the zeolite is calculated as the ratio (A/T) of the total value (A) of the amount of substance of potassium and lithium to the total value (T) of the amount of substance of alkali metals in the GIS-type zeolite. The A/T is preferably 0.05 or more, more preferably 0.10 or more, further preferably 0.15 or more. The upper limit of the A/T is not particularly limited, and the A/T may be 1.00 or less. The A/T can be measured by thermally dissolving the zeolite in an aqueous sodium hydroxide solution or aqua regia, appropriately diluting the resultant to provide a liquid, and subjecting the liquid to ICP-emission spectrochemical analysis. The A/T can be more specifically measured by a method described in Examples below. The A/T can be adjusted by changing the proportions of potassium and lithium as cationic species of the GIS-type zeolite.

The ratio (K/T) of the total value (K) of the amount of substance of potassium to the total value (T) of the amount of substance of alkali metals in the GIS-type zeolite is preferably 0.05 or more, more preferably 0.10 or more, further preferably 0.15 or more. The upper limit of the K/T is not particularly limited and the K/T may be 1.00 or less.

The carbon atom content, the potassium atom content, the SAR, and the $^{29}$Si-MAS-NMR spectrum can be measured by a method described in Examples below. In addition, these can be adjusted within the above ranges by, for example, adjusting synthesis conditions of the GIS-type zeolite within preferable ranges described below.

(Synthesis method)

A method for producing the GIS-type zeolite of the present embodiment may include, for example, a step of preparing a mixed gel containing a silica source including silicon, an aluminum source including aluminum, an alkali source including at least one selected from an alkali metal (M1) and an alkaline earth metal (M2), a salt compound including at least one selected from an alkali metal (M1) and an alkaline earth metal (M2), a phosphorus source including phosphorus, an organic structure-directing agent and water. Hereinafter, the mixed gel and each component included therein will be described.

[Mixed gel]

The mixed gel in the present embodiment is a mixture including a silica source, an aluminum source, a salt compound, and water as components, and including, if necessary, a phosphorus source, an alkali source, and an organic structure-directing agent.

The silica source refers to a component in the mixed gel, serving as a starting material of silicon included in a zeolite produced from the mixed gel, the aluminum source refers to a component in the mixed gel, serving as a starting material of aluminum included in a zeolite produced from the mixed gel, the salt compound refers to a component serving as starting material(s) of an alkali metal and/or an alkaline earth metal included in a zeolite produced from the mixed gel, the alkali source refers to a component for adjustment of alkalinity of the mixed gel, and the phosphorus source refers to a component in the mixed gel, serving as a starting material of phosphorus included in a zeolite produced from the mixed gel.

[Silica source]

The silica source is not particularly limited as long as it is one commonly used, and examples thereof include crystalline silica, amorphous silica, silicic acid, silicate and an organosilicate compound. More specific examples thereof include sodium silicate, potassium silicate, calcium silicate, magnesium silicate, fumed silica, precipitated silica, silica gel, colloidal silica, aluminosilicate, tetraethoxysilane (TEOS) and trimethylethoxysilane. These compounds may be used singly or in combinations of a plurality thereof. Here, aluminosilicate serves as the silica source and also serves as the aluminum source.

Among them, fumed silica, colloidal silica, or precipitated silica is preferable from the viewpoint that a zeolite high in the degree of crystallinity tends to be obtained.

[Aluminum source]

The aluminum source is not particularly limited as long as it is one commonly used, and specific examples thereof include, sodium aluminate, aluminum sulfate, aluminum nitrate, aluminum acetate, aluminum hydroxide, aluminum oxide, aluminum chloride, aluminum alkoxide, metallic aluminum and amorphous aluminosilicate gel. These compounds may be used singly or in combinations of a plurality thereof.

Among them, sodium aluminate, aluminum sulfate, aluminum nitrate, aluminum acetate, aluminum hydroxide, aluminum chloride or aluminum alkoxide is preferable from the viewpoint that a zeolite high in the degree of crystallinity tends to be obtained. From the same viewpoint, sodium aluminate or aluminum hydroxide is more preferable, and sodium aluminate is further preferable.

[Salt compound]

The salt compound is a compound including an alkali metal such as Li, Na, K, Rb or Cs or an alkaline earth metal such as Ca, Mg, Sr or Ba which promotes crystallization to a zeolite structure in the case of zeolite production. The alkali metal and the alkaline earth metal included in the salt compound added are preferably Na or K, more preferably Na, from the viewpoint of more facilitating crystal formation of the GIS-type framework. The salt compound may be used singly or in combinations of a plurality thereof.

Specific examples of the salt compound include, but not limited to the following, sodium sulfate, sodium sulfite, sodium thiosulfate, sodium nitrite, sodium nitrate, sodium carbonate, sodium hydrogen carbonate, sodium phosphate, sodium acetate, sodium formate, sodium citrate, sodium oxalate, sodium fluoride, sodium chloride, sodium bromide, sodium iodide, thiosodium, sodium silicate, sodium metasilicate, sodium tetraborate, sodium chlorate, sodium perchlorate, sodium cyanide, sodium metastannate, sodium hexahydroxidostannate(IV), sodium hexacyanidoferrate(II), sodium permaganate, sodium chromate and sodium dichromate,

potassium sulfate, potassium sulfite, potassium thiosulfate, potassium nitrite, potassium nitrate, potassium carbonate, potassium hydrogen carbonate, potassium phosphate, potassium acetate, potassium formate, potassium citrate, potassium oxalate, potassium fluoride, potassium chloride, potassium bromide, potassium iodide, thiopotassium, potassium silicate, potassium metasilicate, potassium tetraborate, potassium chlorate, potassium perchlorate, potassium cyanide, potassium metastannate, potassium hexahydroxidostannate(IV), potassium hexacyanidoferrate(II), potassium permaganate, potassium chromate and potassium dichromate, lithium sulfate, lithium sulfite, lithium thiosulfate, lithium nitrite, lithium nitrate, lithium carbonate, lithium hydrogen carbonate, lithium phosphate, lithium acetate, lithium formate, lithium citrate, lithium oxalate, lithium fluoride, lithium chloride, lithium bromide, lithium iodide, thiolithium, lithium silicate, lithium metasilicate, lithium tetraborate, lithium chlorate, lithium perchlorate, lithium cyanide, lithium metastannate, lithium hexahydroxidostannate(IV), lithium hexacyanidoferrate(II), lithium permaganate, lithium chromate and lithium dichromate,

rubidium sulfate, rubidium sulfite, rubidium thiosulfate, rubidium nitrite, rubidium nitrate, rubidium carbonate, rubidium hydrogen carbonate, rubidium phosphate, rubidium acetate, rubidium formate, rubidium citrate, rubidium oxalate, rubidium fluoride, rubidium chloride, rubidium bromide, rubidium iodide, thiorubidium, rubidium silicate, rubidium metasilicate, rubidium tetraborate, rubidium chlorate, rubidium perchlorate, rubidium cyanide, rubidium metastannate, rubidium hexahydroxidostannate(IV), rubidium hexacyanidoferrate(II), rubidium permaganate, rubidium chromate and rubidium dichromate,

cesium sulfate, cesium sulfite, cesium thiosulfate, cesium nitrite, cesium nitrate, cesium carbonate, cesium hydrogen carbonate, cesium phosphate, cesium acetate, cesium formate, cesium citrate, cesium oxalate, cesium fluoride, cesium chloride, cesium bromide, cesium iodide, thiocesium, cesium silicate, cesium metasilicate, cesium tetraborate, cesium chlorate, cesium perchlorate, cesium cyanide, cesium metastannate, cesium hexahydroxidostannate(IV), cesium hexacyanidoferrate(II), cesium permaganate, cesium chromate and cesium dichromate,

magnesium sulfate, magnesium sulfite, magnesium thiosulfate, magnesium nitrite, magnesium nitrate, magnesium carbonate, magnesium hydrogen carbonate, magnesium phosphate, magnesium acetate, magnesium formate, magnesium citrate, magnesium oxalate, magnesium fluoride, magnesium chloride, magnesium bromide, magnesium iodide, thiomagnesium, magnesium silicate, magnesium metasilicate, magnesium tetraborate, magnesium chlorate, magnesium perchlorate, magnesium cyanide, magnesium metastannate, magnesium hexahydroxidostannate(IV), magnesium hexacyanidoferrate(II), magnesium permaganate, magnesium chromate and magnesium dichromate,

calcium sulfate, calcium sulfite, calcium thiosulfate, calcium nitrite, calcium nitrate, calcium carbonate, calcium hydrogen carbonate, calcium phosphate, calcium acetate, calcium formate, calcium citrate, calcium oxalate, calcium fluoride, calcium chloride, calcium bromide, calcium iodide, thiocalcium, calcium silicate, calcium metasilicate, calcium tetraborate, calcium chlorate, calcium perchlorate, calcium cyanide, calcium metastannate, calcium hexahydroxidostannate(IV), calcium hexacyanidoferrate(II), calcium permaganate, calcium chromate and calcium dichromate,

strontium sulfate, strontium sulfite, strontium thiosulfate, strontium nitrite, strontium nitrate, strontium carbonate, strontium hydrogen carbonate, strontium phosphate, strontium acetate, strontium formate, strontium citrate, strontium oxalate, strontium fluoride, strontium chloride, strontium bromide, strontium iodide, thiostrontium, strontium silicate, strontium metasilicate, strontium tetraborate, strontium chlorate, strontium perchlorate, strontium cyanide, strontium metastannate, strontium hexahydroxidostannate(IV), strontium hexacyanidoferrate(II), strontium permaganate, strontium chromate and strontium dichromate,

barium sulfate, barium sulfite, barium thiosulfate, barium nitrite, barium nitrate, barium carbonate, barium hydrogen carbonate, barium phosphate, barium acetate, barium formate, barium citrate, barium oxalate, barium fluoride, barium chloride, barium bromide, barium iodide, thiobarium, barium silicate, barium metasilicate, barium tetraborate, barium chlorate, barium perchlorate, barium cyanide, barium metastannate, barium hexahydroxidostannate(IV), barium hexacyanidoferrate(II), barium permaganate, barium chromate and barium dichromate.

[Alkali source]

The alkali source is used for the purpose of adjusting the alkalinity (pH) in the mixed gel in order to promote crystallization to a zeolite structure in the case of zeolite production. The alkali used may be any compound exhibiting alkalinity, may be either an inorganic compound or an organic compound, and is preferably an inorganic compound in terms of cost, and more preferable examples thereof include alkali metal hydroxide. Examples of the alkali metal hydroxide include lithium hydroxide, sodium hydroxide, potassium hydroxide, rubidium hydroxide and cesium hydroxide, preferably include sodium hydroxide and potassium hydroxide, more preferably include sodium hydroxide. These compounds may be used singly or in combinations of a plurality thereof.

The phosphorus source is not particularly limited as long as it is one commonly used, and specific examples thereof include an aqueous phosphoric acid solution, sodium phosphate, aluminum phosphate, potassium phosphate, lithium phosphate, calcium phosphate and barium phosphate. These compounds may be used singly or in combinations of a plurality thereof.

Among them, an aqueous phosphoric acid solution, sodium phosphate or aluminum phosphate is preferable. From the same viewpoint, an aqueous phosphoric acid solution or sodium phosphate is more preferable and an aqueous phosphoric acid solution is further preferable from the viewpoint that a zeolite high in the degree of crystallinity tends to be obtained.

[Organic structure-directing agent]

The organic structure-directing agent in the case of zeolite production by hydrothermal synthesis of the mixed gel is a compound acting as promoting crystallization to a zeolite structure. In zeolite crystallization, the organic structure-directing agent can be, if necessary, used.

Any organic structure-directing agent may be adopted as the organic structure-directing agent without any limitation in terms of the type as long as it can form a desired GIS-type zeolite. The organic structure-directing agent may be used singly or in combinations of a plurality thereof.

As the organic structure-directing agent, without limitation to the following, for example, any of amines, quaternary ammonium salts, alcohols, ethers, amides, alkyl ureas, alkyl thioureas, cyanoalkanes, and alicyclic heterocyclic compounds including nitrogen as a hetero atom can be used, and alkylamines are preferably used and isopropylamine is more preferably used.

Such salts may have an anion. Representative examples of such an anion include, but not limited to the following, a halogen ion such as $Cl^-$, $Br^-$ and $I^-$, a hydroxide ion, an acetate ion, a sulfate ion, a nitrate ion, a carbonate ion, and a hydrogen carbonate ion. Among them, a halogen ion or a hydroxide ion is preferable and a halogen ion is more preferable from the viewpoint of more facilitating crystal formation of the GIS-type framework.

[Compositional ratio of mixed-gel]

In the present embodiment, it is most important for synthesis of a GIS-type zeolite having an appropriate structure to add the salt compound including an alkali metal and/or an alkaline earth metal. The zeolite is produced with the silica source and the aluminum source dissolved in a water solvent being dissolved and also reacted and thus crystallized, and the salt compound can be added to allow for adjustment of the binding modes of Si and Al and the abundance ratio thereof in the zeolite framework, and allow for synthesis of GIS having an ideal crystal structure.

The ratio between the cation provided from addition of the salt compound, and the aluminum source, is particularly important. The ratio between the cation provided from the salt compound, and the aluminum source, in the mixed gel, is represented by the molar ratio of the sum of the amount E of the cation to $Al_2O_3$, namely, $E/Al_2O_3$. Here, E represents the molar amount of the cation provided from the salt compound: for example, the cationic species $Na^+$ is produced by the addition of sodium nitrate, and $2Na^+$ by the addition of sodium carbonate, and the molar amount of the sum of the cationic species produced by addition of the salt compound is represented by E. The $E/Al_2O_3$ can allow for the change in aggregation state of Al in the mixed gel, leads to control of randomness of Al in zeolite crystal formation, and can allow for synthesis of a GIS-type zeolite having an ideal crystal structure. It is necessary from the above viewpoints to optimally control $E/Al_2O_3$, and $E/Al_2O_3$ is preferably 0.1 or more and 100.0 or less, more preferably 0.5 or more and 80.0 or less, further preferably 0.8 or more and 50.0 or less.

The ratio ($H_2O/OH^-$) of water and $OH^-$ in the mixed gel is important for synthesis of a GIS-type zeolite having an appropriate SAR. "$OH^-$" is $OH^-$ derived from an inorganic hydroxide such as NaOH or $Ca(OH)_2$ for use as the alkali source, or an organic hydroxide such as tetraethylammonium hydroxide, and does not encompass one represented as an oxide such as sodium aluminate or sodium silicate, and $OH^-$ discharged in dissolution of the hydrate in water. The zeolite is produced by not only a reaction of crystallization of the silica source, the aluminum source and the alkali source dissolved in a water solvent, but also elution of some thereof in an alkaline solvent, and then the occurrence of equilibrium of crystallization and re-dissolution. Addition of $OH^-$ derived from an inorganic hydroxide such as NaOH or $Ca(OH)_2$ and/or an organic hydroxide such as tetraethylammonium hydroxide, into the mixed gel, means that the equilibrium of crystallization and re-dissolution is shifted to re-dissolution. In such re-dissolution, dissolution progresses from an amorphous portion or a portion low in crystallinity. Accordingly, a proper increase of $OH^-$ can allow for repeating of re-dissolution and re-crystallization of an incomplete crystal portion, resulting in an increase in formation of an ideal crystal structure. On the other hand, when the amount of $OH^-$ increases too much, excessive dissolution may progress, resulting in generation of no crystal and/or generation of an ANA-type zeolite having other crystal phase, for example, a more stable structure. In addition, alumina dissolved is higher in reactivity than silica, and alumina is more easily incorporated into a crystal. Here, proper adjustment of $OH^-$ can allow for adjustment of the rates of crystallization and re-dissolution, and optimization of the ratio between silica and alumina incorporated into a crystal, resulting in optimization of the SAR of the GIS-type zeolite synthesized.

A high ratio of water ($H_2O/Al_2O_3$) tends to allow components in the mixed gel to be easily dispersed more uniformly, but a too high ratio thereof tends to cause the rate of crystallization to be extremely reduced. Accordingly, such tendencies have any effect on the equilibrium of crystallization and re-dissolution, and thus not only control of $H_2O/OH^-$, but also control of $H_2O/Al_2O_3$ is needed to be optimized in order to synthesize a GIS-type zeolite having an optimal SAR and having an optimal crystal structure.

From the above viewpoint, $H_2O/Al_2O_3$ and $H_2O/OH^-$ are respectively preferably $100 \leq H_2O/Al_2O_3 \leq 780$ and $50 \leq H_2O/OH^- \leq 1000$, more preferably $120 \leq H_2O/Al_2O_3 \leq 778$ and $60 \leq H_2O/OH^- \leq 800$, further preferably $150 \leq H_2O/Al_2O_3 \leq 775$ and $70 \leq H_2O/OH^- \leq 700$.

The ratio between the silica source and the aluminum source in the mixed gel is represented as the molar ratio of the oxides of the corresponding elements, namely, $SiO_2/Al_2O_3$. (Herein, the ratio in the zeolite synthesized and the silica/alumina ratio in the mixed gel are not matched. The silica/alumina ratio in the zeolite synthesized is determined depending on other compositional and synthesis conditions.)

The $SiO_2/Al_2O_3$ in the mixed gel is not particularly limited as long as zeolite can be formed, and is preferably 3.0 or more and 70.0 or less, more preferably 3.5 or more and 65.0 or less, further preferably 4.0 or more and 60.0 or less because formation of a zeolite having a framework different from the GIS-type framework can be suppressed.

The ratio between the aluminum source and the alkali metal and the alkaline earth metal in the mixed gel is represented by the molar ratio of the sum of $M1_2O$ and $M2O$ to $Al_2O_3$, namely, $(M1_2O+M2O)/Al_2O_3$ (wherein M1 represents the alkali metal and M2 represents the alkaline earth metal, and these are each calculated in terms of oxide). Herein, the ratio $(M1_2O+M2O)/Al_2O_3$ is preferably 1.5 or more, more preferably 1.6 or more, further preferably 1.65 from the viewpoint of more facilitating crystal formation of the GIS-type framework. The $(M1_2O+M2O)/Al_2O_3$ is preferably 15.0 or less, more preferably 12.0 or less, further preferably 10.0 or less from the viewpoint that formation of a zeolite having a framework different from the GIS-type framework can be suppressed.

The ratio between the phosphorus source and the aluminum source in the mixed gel is represented as the molar ratio of the oxides of the corresponding elements, namely, $P_2O_5/Al_2O_3$. The ratio $P_2O_5/Al_2O_3$ is not particularly limited as long as zeolite can be formed, and the ratio is preferably less than 1.0, more preferably 0.6 or less, further preferably 0.4 or less, particularly preferably 0 because formation of a zeolite having a framework different from the GIS-type framework tends to be able to be suppressed.

When the organic structure-directing agent is included in the mixed gel, the ratio between the aluminum source and the organic structure-directing agent is represented by the molar ratio of the organic structure-directing agent to $Al_2O_3$, namely, $R/Al_2O_3$ (wherein R represents the organic structure-directing agent). The ratio is preferably less than 7.0, more preferably 6.0 or less, further preferably 5.0 or less from the viewpoint of more facilitating crystal formation of the GIS-type framework and/or decreasing the synthesis period to allow economic efficiency in zeolite production to be excellent. When the organic structure-directing agent is used, the zeolite organic structure-directing agent remains in a zeolite pore and carbon dioxide cannot enter into the pore, resulting in a decrease in amount of adsorption. While heating to at least 400°C or more is required in order to remove the organic structure-directing agent, a crystal of the GIS-type zeolite is collapsed at 350°C or more and thus is amorphous, and thus the amount of the organic structure-directing agent is preferably small. From this viewpoint, $R/Al_2O_3$ is preferably 4.0 or less, more preferably 3.5 or less, further preferably 3.0 or less.

As described above, the method for producing the GIS-type zeolite of the present embodiment includes a step of preparing a mixed gel containing a silica source including silicon, an aluminum source including aluminum, an alkali source including at least one selected from an alkali metal (M1) and an alkaline earth metal (M2), a salt compound including at least one selected from an alkali metal (M1) and an alkaline earth metal (M2), a phosphorus source, and water, wherein, when the molar ratios of components in the mixed gel are calculated in terms of oxides of corresponding elements with respect to the silicon, the aluminum, the alkali metal (M1) and the alkaline earth metal (M2), and the phosphorus source, the molar ratios $\alpha$, $\beta$, $\gamma$, $\delta$, $\varepsilon$ and $\zeta$ represented by the following expressions (1), (2), (3), (4), (5) and (6) preferably satisfy $0.1 \leq \alpha, \leq 100.0$, $3.0 \leq \beta \leq 70.0$, $1.5 \leq \gamma \leq 15.0$, $0 \leq \delta < 1.0$, $100 \leq \varepsilon \leq 780$ and $50 \leq \zeta \leq 1000$, more preferably satisfy $0.5 \leq \alpha, \leq 80.0$, $3.5 \leq \beta \leq 65.0$, $1.6 \leq \gamma \leq 12.0$, $0 \leq \delta \leq 0.6$, $120 \leq \varepsilon \leq 778$ and $60 \leq \zeta \leq 800$, further preferably satisfy $0.8 \leq \alpha \leq 50$, $4.0 \leq \beta \leq 60.0$, $1.65 \leq \gamma \leq 10.0$, $0 \leq \delta \leq 0.4$, $150 \leq \varepsilon \leq 775$ and $70 \leq \zeta \leq 700$. The GIS-type zeolite according to the present embodiment is particularly preferably one obtained by the above method for producing the GIS-type zeolite of the present embodiment.

$$\alpha = E/Al_2O_3 \qquad (1)$$

$$\beta = SiO_2/Al_2O_3 \qquad (2)$$

$$\gamma = (M1_2O + M2O)/Al_2O_3 \qquad (3)$$

$$\delta = P_2O_5/Al_2O_3 \qquad (4)$$

$$\varepsilon = H_2O/Al_2O_3 \qquad (5)$$

$$\xi = H_2O/OH^- \qquad (6)$$

Furthermore, in the method for producing a GIS-type zeolite according to the present embodiment, preferably, the molar ratios $\alpha$, $\beta$, $\gamma$, $\delta$, $\varepsilon$ and $\xi$ satisfy the above ranges, and when the mixed gel further includes an organic structure-directing agent R, the molar ratio $\eta$ represented by the following expression (7) preferably satisfies $\eta \leq 4$.

$$\eta = R/Al_2O_3 \qquad (7)$$

Although a seed crystal is not necessarily needed to be present in the mixed gel, a GIS-type zeolite produced in advance can also be added as a seed crystal to the mixed gel, to provide the GIS-type zeolite of the present embodiment.

[Step of preparing mixed gel]

The step of preparing a mixed gel is not particularly limited, and may include, for example, a mixing step of mixing a silica source, an aluminum source, a salt compound, water, and, if necessary, a phosphorus source, an alkali source an organic structure-directing agent at one time or at multiple stages, and an aging step of the mixture obtained in the mixing step.

The mixing step can mix components including the silica source, the aluminum source, the salt compound, water, and, if necessary, the phosphorus source, the alkali source the organic structure-directing agent at one time or at multiple stages.

The order in mixing at multiple stages is not limited, and may be appropriately selected depending on conditions used. The mixing at multiple stages may be performed either with stirring or without stirring. In stirring, a stirring method commonly used is adopted without any particular limitation, and specific examples include methods using blade stirring, vibration stirring, oscillation stirring, and centrifugation stirring, and the like.

The rotational speed in stirring is not particularly limited as long as it is a stirring speed commonly used, and is, for example, 1 rpm or more and less than 2000 rpm.

The temperature in the mixing step is not particularly limited as long as it is a temperature commonly used, and is, for example, -20°C or more and less than 80°C.

The period for the mixing step is not particularly limited and can be appropriately selected depending on the temperature in the mixing step, and is, for example, more than 0 minutes and 1000 hours or less.

The aging step may be performed with either standing or stirring. In stirring in the aging step, a stirring method commonly used is adopted without any particular limitation, and specific examples include methods using blade stirring, vibration stirring, oscillation stirring, and centrifugation stirring.

The rotational speed in stirring is not particularly limited as long as it is a stirring speed commonly used, and is, for example, 1 rpm or more and less than 2000 rpm.

The temperature in the aging step is not particularly limited as long as it is a temperature commonly used, and is, for example, -20°C or more and less than 80°C.

The period for the aging step is not particularly limited, can be appropriately selected depending on the temperature in the aging step, and is, for example, more than 0 minutes and 1000 hours or less.

It is considered in zeolite production that dissolution of starting materials and production and re-dissolution of a zeolite precursor occur in the mixing step and the aging step of starting materials. In order to form a large periodic structure including an 8-membered ring without the occurrence of defects and the like, it is preferable not to allow formation of a zeolite precursor to excessively progress. When formation of a zeolite precursor excessively progresses, it is preferable not to excessively age such a precursor because generation of an ANA-type zeolite having a more stable structure tends to be increased. On the other hand, starting materials are preferably sufficiently mixed to provide a uniform starting material gel. The total period for the mixing step and the aging step combined may be appropriately adjusted based on the composition of starting materials, and the like in order to obtain a zeolite having a proper structure, and is not particularly limited. The period is typically preferably 1 minute or more and less than 24 hours, more preferably 3 minutes or more and less than 23 hours, further preferably 10 minutes or more and 18 hours or less, still further preferably 12 minutes or more and 15 hours or less, furthermore preferably 20 minutes or more and 6 hours or less.

[Hydrothermal synthesis step]

The method for producing a GIS-type zeolite according to the present embodiment preferably further includes a hydrothermal synthesis step where the hydrothermal synthesis temperature is 80°C to 200°C, and the hydrothermal synthesis temperature is more preferably 100°C to 180°C. That is, the mixed gel obtained in the preparation step is preferably subjected to hydrothermal synthesis with being kept at a predetermined temperature for a predetermined period with stirring or standing.

The temperature in the hydrothermal synthesis is not particularly limited as long as it is a temperature commonly used, and it is preferably 80°C or more from the viewpoint of decreasing the synthesis period to allow economic efficiency in zeolite production to be excellent. The temperature is more preferably 90°C or more, further preferably 100°C or more from the viewpoint that formation of a zeolite having a framework different from the GIS-type framework can be suppressed. The temperature is more preferably 200°C or less, further preferably 180°C or less, further preferably 170°C or less from the viewpoint that formation of a zeolite having a framework different from the GIS-type framework can be suppressed. The temperature in the hydrothermal synthesis may be constant or may be changed stepwise.

The period for the hydrothermal synthesis is not particularly limited as long as it is a period commonly used, and can be appropriately selected depending on the temperature in the hydrothermal synthesis. The period for the hydrothermal synthesis is preferably 3 hours or more, more preferably 10 hours or more from the viewpoint that the GIS framework is formed. The period is further preferably 24 hours or more from the viewpoint that a GIS-type zeolite high in crystallinity is obtained. The period for the hydrothermal synthesis is preferably 30 days or less, more preferably 20 days or less, further preferably 10 days or less from the viewpoint of allowing the economic efficiency in zeolite production to be excellent.

The container to which the mixed gel is loaded in the hydrothermal synthesis step is not particularly limited as long as it is a container commonly used, and when the pressure in the container is increased at a predetermined temperature or is gas pressure not inhibiting crystallization, the mixed gel is preferably loaded in a pressure-resistant container and subjected to the hydrothermal synthesis. The pressure-resistant container is not particularly limited, and a pressure-resistant container having any of various shapes such as spherical, longitudinally elongated, and horizontally elongated shapes can be used.

When the mixed gel in the pressure-resistant container is stirred, the pressure-resistant container is rotated vertically and/or laterally, preferably rotated vertically. When the pressure-resistant container is rotated vertically, the rotational speed is not particularly limited as long as it is within a range commonly used, and it is preferably 1 to 50 rpm, more preferably 10 to 40 rpm.

In the hydrothermal synthesis step, examples of preferable stirring of the mixed gel include a method including using a pressure-resistant container having a longitudinally elongated shape and vertically rotating it.

[Separation/drying step]

After the hydrothermal synthesis step, the solid as the product and the liquid including water are separated, and the separation method is not particularly limited as long as it is a common method. Filtration, decantation, a spray-drying method (rotary atomization, nozzle atomization, ultrasonic atomization or the like), a drying method using a rotary evaporator, a vacuum drying method, a freeze-drying method, a natural drying method, or the like can be used, and separation can be usually made by filtration or decantation.

The resultant from separation may be used as it is, or may be washed with water or a predetermined solvent. The resultant from separation can be, if necessary, dried. The temperature at which the resultant from separation is dried is not particularly limited as long as it is a common drying temperature, and it is usually from room temperature to 150°C or less. The atmosphere during drying is not particularly limited as long as it is an atmosphere commonly used, and an air atmosphere, or an atmosphere to which an inert gas such as nitrogen or argon, or oxygen is added is usually used.

[Calcining step]

A GIS-type zeolite, if necessary, calcined can be used. The calcining temperature is not particularly limited as long as it is a temperature commonly used, and it is preferably 300°C or more, more preferably 350°C or more from the viewpoint that, when the organic structure-directing agent is desired to be removed, the proportion thereof remaining can be decreased. The temperature is further preferably 360°C or more from the viewpoint that the calcining period is decreased to allow the economic efficiency in zeolite production to be excellent. The temperature is preferably less than 450°C, more preferably 420°C or less, further preferably 400°C or less because crystallinity of zeolite tends to be retained.

The calcining period is not particularly limited as long as it is a period where the organic structure-directing agent is sufficiently removed, and it can be appropriately selected depending on the calcining temperature and is preferably 0.5 hours or more, more preferably 1 hour or more, further preferably 3 hours or more because the proportion of the remaining organic structure-directing agent tends to be able to be decreased. The calcining period is preferably 10 days or less, more preferably 7 days or less, further preferably 5 days or less because crystallinity of zeolite tends to be retained.

The calcining atmosphere is not particularly limited as long as it is an atmosphere commonly used, and an air atmosphere, or an atmosphere to which an inert gas such as nitrogen or argon, or oxygen is added is usually used.

[Cation exchange]

The GIS-type zeolite can be, if necessary, subjected to cation exchange to a desired cation type. In such cation exchange, without limitation to the following, for example, carbonate such as sodium carbonate, potassium carbonate, lithium carbonate, rubidium carbonate, cesium carbonate, magnesium carbonate, calcium carbonate, strontium carbonate, barium carbonate or ammonium carbonate, or nitrate such as sodium nitrate, potassium nitrate, lithium nitrate, rubidium nitrate, cesium nitrate, magnesium nitrate, calcium nitrate, strontium nitrate, barium nitrate or ammonium nitrate, or a salt where a carbonate ion or a nitrate ion included in the carbonate or the nitrate is changed to a halide ion, a sulfate ion, a carbonate ion, a hydrogen carbonate ion, an acetate ion, a phosphate ion or a hydrogen phosphate ion, or an acid such as nitric acid or hydrochloric acid can be used.

The cation exchange temperature is not particularly limited as long as it is a common cation exchange temperature, and it is usually from room temperature to 100°C or less.

In separation of zeolite after such cation exchange, the separation method is not particularly limited as long as it is a common method. Filtration, decantation, a spray-drying method (rotary atomization, nozzle atomization, ultrasonic atomization or the like), a drying method using a rotary evaporator, a vacuum drying method, a freeze-drying method, a natural drying method, or the like can be used, and separation can be usually made by filtration or decantation.

The resultant from separation may be used as it is, or may be washed with water or a predetermined solvent. The resultant from separation can be, if necessary, dried.

The temperature at which the resultant from separation is dried is not particularly limited as long as it is a common drying temperature, and it is usually from room temperature to 150°C or less.

The atmosphere during drying is not particularly limited as long as it is an atmosphere commonly used, and an air atmosphere, or an atmosphere to which an inert gas such as nitrogen or argon, or oxygen is added is usually used.

Furthermore, an ammonium-type zeolite can also be calcined and thus converted to a proton-type zeolite.

A potassium atom is preferably included as the cationic species in the zeolite from the viewpoint of an enhancement in selective adsorption ability of carbon dioxide. The content of potassium in the zeolite is calculated as the ratio (K/Al) of the atomic percentage of potassium to the atomic percentage of aluminum. The ratio (K/Al) of the atomic percentage of potassium to the atomic percentage of aluminum in the zeolite is preferably 0.05 or more, more preferably 0.10 or more, further preferably 0.15 or more. While the upper limit of the K/Al is not particularly limited, the K/Al, if exceeds 1.00, causes the presence of excess K ion species, and thus the ratio (K/Al) of the atomic percentage of potassium to the atomic percentage of aluminum in the zeolite is preferably 2.00 or less, preferably 1.50 or less, further preferably 1.00 or less.

The GIS-type zeolite of the present embodiment is not particularly limited in the application thereof, and can be used for, for example, separating agents or separation membranes for various gases and liquids, electrolyte membranes for fuel cells and the like, fillers of various resin molded articles, membrane reactors, catalysts for hydrocracking, alkylation and the like, catalyst carriers for carrying metals, metal oxides, and the like, adsorbents, desiccants, detergent aids, ion exchangers, waste water treatment agents, fertilizers, food additives, cosmetic additives, and the like.

Among the above, the GIS-type zeolite of the present embodiment can be suitably used as an adsorbent. That is, an adsorbent of the present embodiment includes the GIS-type zeolite of the present embodiment. The adsorbent of the present embodiment is thus configured, and thus can sufficiently adsorb carbon dioxide and is also high in selectivity of adsorption of carbon dioxide relative to the amount of adsorption of methane. Therefore, the adsorbent can be particularly preferably used for the purpose of, for example, selective removal of carbon dioxide from natural gas.

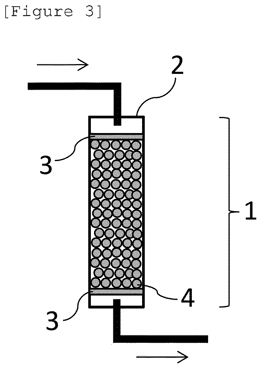

The adsorbent of the present embodiment is not particularly limited in terms of the configuration thereof as long as it includes the GIS-type zeolite of the present embodiment, and examples of a typical configuration include an example illustrated in Figure 3. An adsorbent 1 of the present embodiment, illustrated in Figure 3, includes a filter 3 disposed at each of two positions closer to the inlet and the outlet in a container 2, and a plurality of zeolite particles 4(the GIS-type zeolite of the present embodiment) disposed between such two filters 3. For example, a filter formed from quartz can be used for the filter 3. For example, when the adsorbent 1 is used for removal of carbon dioxide from natural gas, the natural gas can be introduced through an upper line and impurities can be removed therefrom by the filter 3, thereafter carbon dioxide is selectively adsorbed and removed by the zeolite particles 4, and a methane-rich gas can be taken out through a lower line. Herein, an object to be subjected to the adsorbent is not limited to natural gas, and the inner structure of the adsorbent is also not limited to the example illustrated in Figure 3.

(Separation method)

The separation method of the present embodiment is to separate one or more selected from the group consisting of $CO_2$, $H_2O$, He, Ne, $Cl_2$, $NH_3$, and HCl from mixture including two or more gases selected from the group consisting of $H_2$, $N_2$, $O_2$, CO, and hydrocarbon, by use of an adsorbing material including the GIS-type zeolite of the present embodiment. In the present embodiment, it is preferable to separate one or more selected from the group consisting of

$CO_2$ and $H_2O$ from one or more gases selected from the group consisting of $N_2$, $O_2$, CO, and hydrocarbon. Herein, the hydrocarbon is not particularly limited, and examples thereof include methane, ethane, ethylene, propane, propylene, 1-butene, 2-butene, 2-methylpropene, dimethyl ether, and acetylene.

The GIS-type zeolite of the present embodiment is high in volume of adsorption of $CO_2$, and physical adsorption through no chemical bond is observed. Such a separation method using the GIS-type zeolite of the present embodiment is not particularly limited, and is preferably a method low in energy in reproduction of an adsorbing material and excellent in economic performance. A specific example of such a method here used is, but not particularly limited, preferably any of a pressure swing-type adsorption-separation method, a temperature swing-type adsorption-separation method, or a pressure/temperature swing-type adsorption-separation method. A pressure swing-type adsorption-separation method (PSA: Pressure Swing Adsorption) is a method where gas separation is performed by decreasing the pressure in gas desorption so that the pressure is lower than that in gas adsorption and utilizing the difference between the amount of adsorption at a high pressure and the amount of adsorption at a low pressure. A temperature swing-type adsorption-separation method (TSA: Thermal Swing Adsorption) is a method where gas separation is performed by increasing the temperature in gas desorption so that the temperature is higher than that in gas adsorption and utilizing the difference between the amount of adsorption at a low temperature and the amount of adsorption at a high temperature. A combined method of such methods is a pressure/temperature swing-type adsorption desorption method (PTSA: Pressure and Thermal Swing Adsorption). Such methods can be performed in various known conditions.

Examples

Hereinafter, the present embodiment will be described with reference to Examples and the like in more detail, but such Examples are illustrative, and the present embodiment is not intended to be limited to the following Examples. The following Examples can be variously modified and carried out as the present embodiment by those skilled in the art, and such modifications are encompassed within the scope of the present invention as long as these can satisfy predetermined requirements of the present embodiment.

[Atomic percentages of silicon, aluminum, phosphorus, and potassium, and content of potassium in zeolite]

Each zeolite was dissolved with heating in an aqueous sodium hydroxide solution or aqua regia, and appropriately diluted to provide a liquid, and the liquid was used to measure the atomic percentages of silicon, aluminum, phosphorus, potassium and lithium in the zeolite by ICP-emission spectrochemical analysis (hereinafter, also referred to as "ICP-AES", apparatus name: SPS3520UV-DD, manufactured by Hitachi High-Tech Science Corporation). The contents of potassium and lithium in the zeolite were calculated in terms of the ratio (A/T) of the total value (A) of the amount of substance of potassium and lithium to the total value (T) of the amount of substance of alkali metals in the zeolite. The K/T was also calculated in the same manner. The content of potassium in the zeolite was calculated as the ratio (K/Al) of the atomic percentage of potassium to the atomic percentage of aluminum.

[Measurement of carbon atom content]

About 2 mg of a powder sample of the GIS-type zeolite was weighed, and the carbon atom content in the zeolite was measured by CHN elemental analysis (MT-6: apparatus name, manufactured by Anatec Yanaco Corporation). Since only a carbon atom contained in the zeolite was detected in a zeolite sample after adsorption of $CO_2$, the elemental analysis was made by placing such a zeolite powder sample in a closed container, performing vacuuming with a vacuum pump for 3 hours or more with heating at 200°C, then taking out the resultant in the air, and leaving the resultant to still stand in the air for 24 hours or more and then performing weighing.

[X-Ray diffraction; crystal structure analysis]

X-Ray diffraction was performed according to the following procedure.

(1) A dried product obtained in each of Examples and Comparative Examples was used as a sample, and pulverized by an agate mortar. A mixed product was used as a structure analysis sample, the product being obtained by further adding 10% by mass of crystalline silicon (produced by Rare Metallic Co., Ltd.) and mixing the resultant by an agate mortar until a homogeneous system was achieved.

(2) The sample in (1) above was uniformly secured on a non-reflective sample plate for powder, and crystal structure analysis was performed by X-ray diffraction in the following conditions.

X-ray diffraction apparatus (XRD): powder X-ray diffraction apparatus "RINT2500 Model" (trade name) manufactured by Rigaku Corporation

X-ray source: Cu tube (40 kV, 200 mA)

Measurement temperature: 25°C

Measurement range: 5 to 60°(0.02°/step)

Measurement speed: 0.2°/min

Slit width (scattering, diffusion, light reception): 1°, 1°, 0.15 mm

[Measurement of $^{29}$Si-MAS-NMR, and SAR]

Measurement of $^{29}$Si-MAS-NMR of the zeolite was performed by the following method. The SAR of the zeolite can be determined by measurement of $^{29}$Si-MAS-NMR.
First, water was put on the bottom of a desiccator, for humidity conditioning of a zeolite, and a zeolite placed in a sample tube was retained thereon for 48 hours. After humidity conditioning treatment, $^{29}$Si-MAS-NMR measurement was performed under the following conditions.

Apparatus: JEOL RESONANCE ECA700
Magnetic field intensity: 16.44 T ($^1$H resonant frequency 700 MHz)
Measurement nucleus: $^{29}$Si
Resonant frequency: 139.08 MHz
NMR tube: 4 mmφ (rotor made of zirconia)
Measurement method: DD/MAS (dipolar decoupling magic angle spinning)
Pulse width: 45°
Waiting time: 50 sec
Cumulated number: 800 (measurement time; about 22 hours)
MAS: 10,000 Hz
Chemical shift reference: silicone rubber (-22.34 ppm), external reference

A molded article including a GIS-type zeolite shows the following five peaks in a $^{29}$Si-MAS-NMR spectrum.

(1) Q4(0Al): peak assigned to Si not bound with any Al via oxygen
(2) Q4(1Al): peak assigned to Si bound with one Al atom via oxygen
(3) Q4(2Al): peak assigned to Si bound with two Al atoms via oxygen
(4) Q4(3Al): peak assigned to Si bound with three Al atoms via oxygen
(5) Q4(4Al): peak assigned to Si bound with four Al atoms via oxygen

The peak positions in a $^{29}$Si-MAS-NMR spectrum are generally present at -112 ppm to -80 ppm, and can be assigned to Q4(0Al), Q4(1Al), Q4(2Al), Q4(3Al), or Q4(4Al) from the high magnetic field side. While the peak positions can be changed depending on cationic species present in the zeolite framework, the peak positions are generally present in the following ranges.

(1) Q4(0Al): -105 ppm to -112 ppm
(2) Q4(1Al): -100 ppm to -105 ppm
(3) Q4(2Al): -95 ppm to -100 ppm
(4) Q4(3Al): -87 ppm to -95 ppm
(5) Q4(4Al): -80 ppm to -87 ppm

The area intensities of the peaks in a $^{29}$Si-MAS-NMR spectrum are obtained by analysis with Gauss and Lorenz functions by use of analysis program dmfit (#202000113 version), and optimization calculation of four parameters of the amplitude (the height of the maximum value in the spectrum), the position (each position in the spectrum, ppm), the width (the full width at half maximum in the spectrum, ppm), and the Gauss/Lorenz ratio (xG/(1 - x)L), according to the algorithm of the least squares method. When the areas of the respective peaks of Q4(0Al), Q4(1Al), Q4(2Al), Q4(3Al), and Q4(4Al) are defined as A_Q4(0Al), A_Q4(1Al), A_Q4(2Al), A_Q4(3Al), and A_Q4(4Al), and the total value of A_Q4(0Al), A_Q4(1Al), A_Q4(2Al), A_Q4(3Al), and A_Q4(4Al) is defined as A_total, the SAR can be determined according to the following.

SAR = 100/ [A_Q4 (1A1) / 4 + 2 × A_Q4 (2A1) / 4 + 3 × A_Q4(3A1)/4 + 4 × A_Q4(4A1)/4] × 2

[Amount of adsorption of $CO_2$ and amount of hysteresis; Gas adsorption-desorption isotherm measurement]

Gas adsorption-desorption isotherm measurement was performed according to the following procedure.

(1) A dried product obtained in each of Examples and Comparative Examples was used as a sample, and 0.2 g thereof was placed in a 12-mm cell (manufactured by Micromeritics Instrument Corporation).
(2) The sample placed in the cell of (1) above was mounted in a gas adsorption measuring apparatus "3-Flex" (trade name) manufactured by Micromeritics Instrument Corporation, and subjected to a degassing treatment with heating under vacuum at 250°C and 0.001 mmHg or less for 12 hours.
(3) The sample placed in the cell after the treatment in (2) above was placed in constant-temperature circulating water at 25°C, and, after the sample temperature reached 25 ± 0.2°C, measurement with liquefied carbon dioxide gas (produced by Sumitomo Seika Chemicals Co., Ltd., purity: 99.9% by mass or more) was conducted with the absolute pressure being 0.25 up to 760 mmHg. Here, the pressure was measured over time during the measurement, and it was determined that the amount of saturation adsorption was achieved when the pressure variation reached 0.001%/10 sec or less, and the amount of saturation adsorption was defined as the amount of adsorption of $CO_2$ (unit: cc/g) at 25°C. The amount of adsorption of $CO_2$ is preferably 50 cc/g or more, more preferably 70 cc/g or more.
(4) Following the measurement of (3) above, the pressure was reduced over time from an absolute pressure of 760 to 0.25 mmHg, and desorption isotherm measurement of carbon dioxide was performed. For determination of equilibrium, measurement was performed in the same manner as (3) at a pressure variation of 0.001%/10 sec or less.
(5) The index representing the amount of hysteresis in an adsorption-desorption isotherm of carbon dioxide was as follows: when the amount of equilibrium adsorption at 75 mmHg in the adsorption isotherm measured in (3) and the amount of equilibrium adsorption at 75 mmHg in the desorption isotherm measured in (4) were respectively defined as q(Ad) and q(De), q(Ad)/q(De) was defined as the index representing the amount of hysteresis. A case of q(Ad)/q(De) = 1.00 indicates no hysteresis, and a smaller q(Ad)/q(De) indicates a state of a larger hysteresis.

[Amount of adsorption of $CH_4$; Gas adsorption isotherm measurement]

Gas adsorption isotherm measurement was performed according to the following procedure.

(1) A dried product obtained in each of Examples and Comparative Examples was used as a sample, and 0.2 g thereof was placed in a 12-mm cell (manufactured by Micromeritics Instrument Corporation).
(2) The sample placed in the cell of (1) above was mounted in a gas adsorption measuring apparatus "3-Flex" (trade name) manufactured by Micromeritics Instrument Corporation, and subjected to a degassing treatment with heating under vacuum at 250°C and 0.001 mmHg or less for 12 hours.
(3) The sample placed in the cell after the treatment in (2) above was placed in constant-temperature circulating water at 35°C, and, after the sample temperature reached 25 ± 0.2°C, measurement with methane gas (produced by Fujii Shoji Co., Ltd., purity: 99.99% by mass or more) was conducted with the absolute pressure being 0.25 up to 760 mmHg. Here, the pressure was measured over time during the measurement and it was determined that the amount of saturation adsorption was achieved when the pressure variation reached 0.001%/10 sec or less, and the amount of saturation adsorption was defined as the amount of adsorption of $CH_4$ (unit: cc/g) at 25°C. The amount of adsorption of $CH_4$ is preferably 8 cc/g or less, more preferably 4 cc/g or less, further preferably 1 cc/g or less.

[Example 1]

61.93 g of water, 0.403 g of sodium hydroxide (NaOH, produced by FUJIFILM Wako Pure Chemical Corporation), 3.39 g of sodium nitrate (NaNO3, produced by FUJIFILM Wako Pure Chemical Corporation), 1.64 g of sodium aluminate (NaAlO$_2$, produced by FUJIFILM Wako Pure Chemical Corporation) and 10.82 g of colloidal silica (Ludox AS-40, solid concentration: 40% by mass, produced by W. R. Grace & Co.-Conn.) were mixed, and stirred for 30 minutes, thereby preparing a mixed gel. The composition of the mixed gel was as follows: α = E/Al$_2$O$_3$ = 4.53, β = SiO$_2$/Al$_2$O$_3$ = 8.17, γ = Na$_2$O/Al$_2$O$_3$ = 3.99, δ = P$_2$O$_5$/Al$_2$O$_3$ = 0.00, ε = H$_2$O/Al$_2$O$_3$ = 431.0, ζ = H$_2$O/OH$^-$ = 376.7, and η = R/Al$_2$O$_3$ = 0.00. The mixed gel was loaded to a 200-mL stainless micro-bomb (manufactured by HIRO COMPANY) with a fluororesin inner cylinder placed, and subjected to hydrothermal synthesis at a stirring speed of 30 rpm at 135°C for 4 days by a stirring type constant-temperature bath (manufactured by HIRO COMPANY) rotatable in a vertical direction of the micro-bomb. A product was subjected to filtration and dried at 120°C, and thereafter a powdered zeolite was obtained. It was confirmed from an XRD spectrum that the resulting zeolite was a GIS-type zeolite. Furthermore, there were not observed any peaks derived from other zeolite, amorphous silica-alumina and the like, and therefore the resulting zeolite was evaluated to be a high-purity GIS-type zeolite.

The resulting zeolite was subjected to measurement of the aluminum and silicon concentrations with ICP-AES and the silica/alumina ratio was calculated, and as a result, SAR was 6.90. In addition, ICP-emission spectrochemical analysis was performed, and A/T was 0.00 (= K/T) and the potassium concentration K/Al in the zeolite was 0.00. The carbon atom concentration was measured by CHN analysis, but no carbon atom was detected.

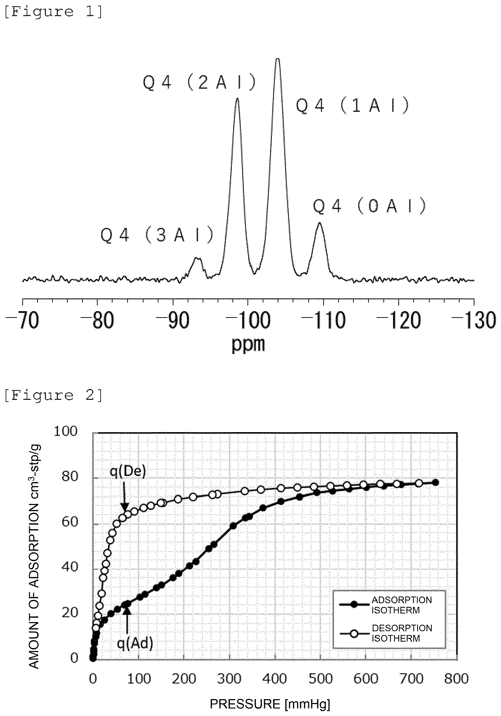

A $^{29}$Si-MAS-NMR spectrum of the resulting zeolite is illustrated in Figure 1. Z was 0.305 by the $^{29}$Si-MAS-NMR spectrum.

The adsorption isotherm and the desorption isotherm of $CO_2$ into the resulting GIS-type zeolite were measured, thus the amount of adsorption at 760 mmHg was 82.2 cc/g and q(Ad)/q(De) was 0.984. The adsorption isotherm of $CH_4$ was measured in the same manner, and thus the amount of adsorption at 760 mmHg was 6.2 cc/g.

[Example 2]

61.65 g of water, 0.60 g of an aqueous 48% by mass sodium hydroxide solution (NaOH, solid concentration: 48% by mass, produced by Tokuyama Corporation), 2.27 g of sodium carbonate ($Na_2CO_3$, produced by Tokuyama Corporation), 1.64 g of sodium aluminate ($NaAlO_2$, produced by Hokuriku Kasei Industry Co., Ltd.) and 10.82 g of colloidal silica (Ludox AS-40, solid concentration: 40% by mass, produced by W. R. Grace & Co.-Conn.) were mixed, and stirred for 30 minutes, thereby preparing a mixed gel. The composition of the mixed gel was as follows: $\alpha$ = $E/Al_2O_3$ = 4.86, $\beta$ = $SiO_2/Al_2O_3$ = 8.17, $\gamma$ = $Na_2O/Al_2O_3$ = 3.99, $\delta$ = $P_2O_5/Al_2O_3$ = 0.00, $\varepsilon$ = $H_2O/Al_2O_3$ = 431.2, $\zeta$ = $H_2O/OH^-$ = 527.8, and $\eta$ = $R/Al_2O_3$ = 0.00. The mixed gel was loaded to a 200-mL stainless micro-bomb (manufactured by HIRO COMPANY) with a fluororesin inner cylinder placed, and subjected to hydrothermal synthesis at a stirring speed of 30 rpm at 130°C for 5 days by a stirring type constant-temperature bath (manufactured by HIRO COMPANY) rotatable in a vertical direction of the micro-bomb. A product was subjected to filtration and dried at 120°C, and thereafter a powdered zeolite was obtained. 1g of the resulting zeolite was charged into 500 mL of an aqueous 0.05 N potassium carbonate solution adjusted with potassium carbonate ($K_2CO_3$, produced by Nippon Soda Co., Ltd.), and stirred at room temperature and 500 rpm for 3 hours. A product was subjected to filtration and dried at 120°C, and thus a powdered zeolite where the cation was partially exchanged with potassium was obtained. It was confirmed from an XRD spectrum that the resulting zeolite was a GIS-type zeolite. Furthermore, there were not observed any peaks derived from other zeolite, amorphous silica-alumina and the like, and therefore the resulting zeolite was evaluated to be a high-purity GIS-type zeolite.

Each value was determined in the same manner as in Example 1, and thus SAR was 6.90, and Z was 0.220 and no carbon atom was detected by the $^{29}$Si-MAS-NMR spectrum. In addition, ICP-emission spectrochemical analysis was performed, and A/T was 0.98 (= K/T) and the potassium concentration K/Al in the zeolite was 0.98. The adsorption isotherm and the desorption isotherm of $CO_2$ were measured, thus the amount of adsorption at 760 mmHg was 84.0 cc/g and q(Ad)/q(De) was 1.000. The adsorption isotherm of $CH_4$ was measured in the same manner, and thus the amount of adsorption at 760 mmHg was 0.0 cc/g.

[Example 3]

141.41 g of water, 2.62 g of an aqueous sodium hydroxide solution (NaOH, produced by FUJIFILM Wako Pure Chemical Corporation), 8.53 g of sodium nitrate ($NaNO_3$, produced by FUJIFILM Wako Pure Chemical Corporation), 3.85 g of sodium aluminate ($NaAlO_2$, produced by FUJIFILM Wako Pure Chemical Corporation) and 17.41 g of amorphous silica (Perkasil SM500, produced by W. R. Grace & Co.-Conn.) were mixed, and stirred for 1 hour, thereby preparing a mixed gel. The composition of the mixed gel was as follows: $\alpha$ = $E/Al_2O_3$ = 4.85, $\beta$ = $SiO_2/Al_2O_3$ = 14.00, $\gamma$ = $Na_2O/Al_2O_3$ = 5.16, $\delta$ = $P_2O_5/Al_2O_3$ = 0.00, $\varepsilon$ = $H_2O/Al_2O_3$ = 379.3, $\zeta$ = $H_2O/OH^-$ = 120.0, and $\eta$ = $R/Al_2O_3$ = 0.00. The mixed gel was loaded to a 300-mL stainless micro-bomb (manufactured by HIRO COMPANY) with a fluororesin inner cylinder placed, and subjected to hydrothermal synthesis at a stirring speed of 30 rpm at 130°C for 4 days by a stirring type constant-temperature bath (manufactured by HIRO COMPANY) rotatable in a vertical direction of the micro-bomb. A product was subjected to filtration and dried at 120°C, and thereafter a powdered zeolite was obtained. It was confirmed from an XRD spectrum that the resulting zeolite was a GIS-type zeolite. Furthermore, there were not observed any peaks derived from other zeolite, amorphous silica-alumina and the like, and therefore the resulting zeolite was evaluated to be a high-purity GIS-type zeolite.

Each value was determined in the same manner as in Example 1, and thus SAR was 10.1, and Z was 0.519 and no carbon atom was detected by the $^{29}$Si-MAS-NMR spectrum. In addition, ICP-emission spectrochemical analysis was performed, and A/T was 0.00 (= K/T) and the potassium concentration K/Al in the zeolite was 0.00. The adsorption isotherm and the desorption isotherm of $CO_2$ were measured, thus the amount of adsorption at 760 mmHg was 80.0 cc/g and q(Ad)/q(De) was 1.000. The adsorption isotherm of $CH_4$ was measured in the same manner, and thus the amount of adsorption at 760 mmHg was 7.2 cc/g.

[Example 4]

141.41 g of water, 2.62 g of an aqueous sodium hydroxide solution (NaOH, produced by Wako Pure Chemical Industries, Ltd.), 2.43 g of sodium nitrate ($NaNO_3$, produced by FUJIFILM Wako Pure Chemical Corporation), 0.55 g of sodium aluminate ($NaAlO_2$, produced by FUJIFILM Wako Pure Chemical Corporation) and 35.33 g of aluminosilicate (SIPERNAT 820A, produced by Evonik Industries) were mixed, and stirred for 1 hour, thereby preparing a mixed gel. The composition of the mixed gel was as follows: $\alpha = E/Al_2O_3 = 0.88$, $\beta = SiO_2/Al_2O_3 = 14.00$, $\gamma = Na_2O/Al_2O_3 = 2.62$, $\delta = P_2O_5/Al_2O_3 = 0.00$, $\varepsilon = H_2O/Al_2O_3 = 242.4$, $\zeta = H_2O/OH^- = 120.0$, and $\eta = R/Al_2O_3 = 0.00$. The mixed gel was loaded to a 300-mL stainless micro-bomb (manufactured by HIRO COMPANY) with a fluororesin inner cylinder placed, and subjected to hydrothermal synthesis at a stirring speed of 30 rpm at 130°C for 5 days by a stirring type constant-temperature bath (manufactured by HIRO COMPANY) rotatable in a vertical direction of the micro-bomb. A product was subjected to filtration and dried at 120°C, and thereafter a powdered zeolite was obtained. 1g of the resulting zeolite was charged into 500 mL of an aqueous 0.005 N potassium carbonate solution adjusted with potassium carbonate ($K_2CO_3$, produced by Nippon Soda Co., Ltd.), and stirred at room temperature and 500 rpm for 3 hours. A product was subjected to filtration and dried at 120°C, and thus a powdered zeolite where the cation was partially exchanged with potassium was obtained. It was confirmed from an XRD spectrum that the resulting zeolite was a GIS-type zeolite. Furthermore, there were not observed any peaks derived from other zeolite, amorphous silica-alumina and the like, and therefore the resulting zeolite was evaluated to be a high-purity GIS-type zeolite.

Each value was determined in the same manner as in Example 1, and thus SAR was 8.20, and Z was 0.356 and no carbon atom was detected by the $^{29}$Si-MAS-NMR spectrum. In addition, ICP-emission spectrochemical analysis was performed, and A/T was 0.16 (= K/T) and the potassium concentration K/Al in the zeolite was 0.16. The adsorption isotherm and the desorption isotherm of $CO_2$ were measured, thus the amount of adsorption at 760 mmHg was 72.7 cc/g and q(Ad)/q(De) was 0.991. The adsorption isotherm of $CH_4$ was measured in the same manner, and thus the amount of adsorption at 760 mmHg was 0.5 cc/g.

[Example 5]

21.05 g of water, 0.53 g of an aqueous sodium hydroxide solution (NaOH, produced by FUJIFILM Wako Pure Chemical Corporation), 1.37 g of sodium nitrate ($NaNO_3$, produced by FUJIFILM Wako Pure Chemical Corporation), 1.13 g of sodium aluminate ($NaAlO_2$, produced by FUJIFILM Wako Pure Chemical Corporation) and 15.5 g of liquid glass No. 3 (produced by Kishida Chemical Co., Ltd.) were mixed, and stirred for 1 hour, thereby preparing a mixed gel. The composition of the mixed gel was as follows: $\alpha = E/Al_2O_3 = 2.66$, $\beta = SiO_2/Al_2O_3 = 12.39$, $\gamma = Na_2O/Al_2O_3 = 6.10$, $\delta = P_2O_5/Al_2O_3 = 0.00$, $\varepsilon = H_2O/Al_2O_3 = 197.9$, $\zeta = H_2O/OH^- = 90.2$, and $\eta = R/Al_2O_3 = 0.00$. The mixed gel was loaded to a 100-mL stainless micro-bomb (manufactured by HIRO COMPANY) with a fluororesin inner cylinder placed, and subjected to hydrothermal synthesis at a stirring speed of 30 rpm at 130°C for 5 days by a stirring type constant-temperature bath (manufactured by HIRO COMPANY) rotatable in a vertical direction of the micro-bomb. A product was subjected to filtration and dried at 120°C, and thereafter a powdered zeolite was obtained. 1g of the resulting zeolite was charged into 500 mL of an aqueous 0.003 N potassium carbonate solution adjusted with potassium carbonate ($K_2CO_3$, produced by Nippon Soda Co., Ltd.), and stirred at room temperature and 500 rpm for 3 hours. A product was subjected to filtration and dried at 120°C, and thus a powdered zeolite where the cation was partially exchanged with potassium was obtained. It was confirmed from an XRD spectrum that the resulting zeolite was a GIS-type zeolite. Furthermore, there were not observed any peaks derived from other zeolite, amorphous silica-alumina and the like, and therefore the resulting zeolite was evaluated to be a high-purity GIS-type zeolite.

Each value was determined in the same manner as in Example 1, and thus SAR was 3.40, and Z was 0.192 and no carbon atom was detected by the $^{29}$Si-MAS-NMR spectrum. In addition, ICP-emission spectrochemical analysis was performed, and A/T was 0.11 (= K/T) and the potassium concentration K/Al in the zeolite was 0.11. The adsorption isotherm and the desorption isotherm of $CO_2$ were measured, thus the amount of adsorption at 760 mmHg was 51.2 cc/g and q(Ad)/q(De) was 0.978. The adsorption isotherm of $CH_4$ was measured in the same manner, and thus the amount of adsorption at 760 mmHg was 0.8 cc/g.

[Comparative Example 1]

56.70 g of water, 0.335 g of sodium hydroxide (NaOH, produced by FUJIFILM Wako Pure Chemical Corporation), 1.13 g of sodium aluminate ($NaAlO_2$, produced by FUJIFILM Wako Pure Chemical Corporation) and 12.42 g of liquid glass No. 3 (produced by Kishida Chemical Co., Ltd.) were mixed, and stirred for 30 minutes, thereby preparing a mixed gel. The composition of the mixed gel was as follows: $\alpha$ = E/$Al_2O_3$ = 0.00, $\beta$ = $SiO_2$/$Al_2O_3$ = 8.17, $\gamma$ = $Na_2O$/$Al_2O_3$ = 9.23, $\delta$ = $P_2O_5$/$Al_2O_3$ = 0.00, $\varepsilon$ = $H_2O$/$Al_2O_3$ = 431.0, $\zeta$ = $H_2O$/$OH^-$ = 377.0, and $\eta$ = R/$Al_2O_3$ = 0.00. The mixed gel was loaded to a 200-mL stainless micro-bomb (manufactured by HIRO COMPANY) with a fluororesin inner cylinder placed, and subjected to hydrothermal synthesis at a stirring speed of 30 rpm at 135°C for 4 days by a stirring type constant-temperature bath (manufactured by HIRO COMPANY) rotatable in a vertical direction of the micro-bomb. A product was subjected to filtration and dried at 120°C, and thereafter a powdered zeolite was obtained. It was confirmed from an XRD spectrum that the resulting zeolite was a GIS-type zeolite. Furthermore, there were not observed any peaks derived from other zeolite, amorphous silica-alumina and the like, and therefore the resulting zeolite was evaluated to be a high-purity GIS-type zeolite.

Each value was determined in the same manner as in Example 1, and thus SAR was 6.90, and Z was 0.190 and no carbon atom was detected by the $^{29}$Si-MAS-NMR spectrum. In addition, ICP-emission spectrochemical analysis was performed, and A/T was 0.00 (= K/T) and the potassium concentration K/Al in the zeolite was 0.00. The adsorption isotherm and the desorption isotherm of $CO_2$ were measured, thus the amount of adsorption at 760 mmHg was 78.1 cc/g and q(Ad)/q(De) was 0.386. The adsorption isotherm of $CH_4$ was measured in the same manner, and thus the amount of adsorption at 760 mmHg was 3.5 cc/g.

[Comparative Example 2]

143.10 g of water, 40.00 g of an aqueous 50% by mass sodium hydroxide solution (NaOH, solid concentration: 50% by mass, produced by Sigma-Aldrich), 2.70 g of an aluminum powder (Al, produced by FUJIFILM Wako Pure Chemical Corporation) and 75.10 g of colloidal silica (Ludox HS-40, solid concentration: 40% by mass, produced by Sigma-Aldrich) were mixed, and stirred for 24 hours, thereby preparing a mixed gel, based on the content of Non-Patent Literature 7. The composition of the mixed gel was as follows: $\alpha$ = E/$Al_2O_3$ = 0.00, $\beta$ = $SiO_2$/$Al_2O_3$ = 10.0, $\gamma$ = $Na_2O$/$Al_2O_3$ = 2.50, $\delta$ = $P_2O_5$/$Al_2O_3$ = 0.00, $\varepsilon$ = $H_2O$/$Al_2O_3$ = 220.0, $\zeta$ = $H_2O$/$OH^-$ = 44.0, and $\eta$ = R/$Al_2O_3$ = 0.00. The mixed gel was loaded to a 300-mL stainless micro-bomb (manufactured by HIRO COMPANY) with a fluororesin inner cylinder placed, and subjected to hydrothermal synthesis at a stirring speed of 60 rpm at 150°C for 3 days by a stirring type constant-temperature bath (manufactured by HIRO COMPANY) rotatable in a vertical direction of the micro-bomb. A product was subjected to filtration and dried at 120°C, and thereafter a powdered zeolite was obtained. It was confirmed from an XRD spectrum that the resulting zeolite was a GIS-type zeolite. Furthermore, there were not observed any peaks derived from other zeolite, amorphous silica-alumina and the like, and therefore the resulting zeolite was evaluated to be a high-purity GIS-type zeolite.

Each value was determined in the same manner as in Example 1, and thus SAR was 6.00, and Z was 0.176 and no carbon atom was detected by the $^{29}$Si-MAS-NMR spectrum. In addition, ICP-emission spectrochemical analysis was performed, and A/T was 0.00 (= K/T) and the potassium concentration K/Al in the zeolite was 0.00. The adsorption isotherm and the desorption isotherm of $CO_2$ were measured, thus the amount of adsorption at 760 mmHg was 79.8 cc/g and q(Ad)/q(De) was 0.365. The adsorption isotherm of $CH_4$ was measured in the same manner, and thus the amount of adsorption at 760 mmHg was 10.1 cc/g.

[Comparative Example 3]

207.30 g of water, 8.78 g of sodium hydroxide, 16.4 g of sodium aluminate and 248.3 g of liquid glass No. 3 were mixed, and stirred for 15 minutes, thereby preparing a mixed gel, based on the content of Patent Literature 3. The composition of the mixed gel was as follows: $\alpha$ = E/$Al_2O_3$ = 0.00, $\beta$ = $SiO_2$/$Al_2O_3$ = 12.39, $\gamma$ = $Na_2O$/$Al_2O_3$ = 6.10, $\delta$ = $P_2O_5$/$Al_2O_3$ = 0.0, $\varepsilon$ = $H_2O$/$Al_2O_3$ = 197.86, $\xi$ = $H_2O$/$OH^-$ = 90.17, and $\eta$ = R/$Al_2O_3$ = 0.00. The mixed gel was loaded to a 1000-mL stainless autoclave with a fluororesin inner cylinder placed, and was subjected to hydrothermal synthesis at 130°C for 5 days without stirring, a product was subjected to filtration and dried at 120°C, and thereafter a powdered zeolite was obtained. Furthermore, there were not observed any peaks derived from other zeolite, amorphous silica-alumina and the like, and therefore the resulting zeolite was evaluated to be a high-purity GIS-type zeolite.

Each value was determined in the same manner as in Example 1, and thus SAR was 4.10, and Z was 0.151 and no carbon atom was detected by the $^{29}$Si-MAS-NMR spectrum. In addition, ICP-emission spectrochemical analysis was performed, and A/T was 0.00 (= K/T) and the potassium concentration K/Al in the zeolite was 0.00. The adsorption isotherm and the desorption isotherm of $CO_2$ were measured, thus the amount of adsorption at 760 mmHg was 52.4 cc/g and q(Ad)/q(De) was 0.519. The adsorption isotherm of $CH_4$ was measured in the same manner, and thus the amount of adsorption at 760 mmHg was 0.0 cc/g.

[Comparative Example 4]

132.86 g of water, 15.66 g of sodium hydroxide, 7.2 g of sodium aluminate (produced by Alfa Aesar) and 25.56 g of colloidal silica (Ludox AS-40, solid concentration: 40% by mass) were mixed, and stirred at room temperature for 24 hours, thereby preparing a mixed gel, based on the content of Non-Patent Literature 1. The composition of the mixed gel was as follows: $\alpha$ = E/Al$_2$O$_3$ = 0.00, $\beta$ = SiO$_2$/Al$_2$O$_3$ = 7.96, $\gamma$ = Na$_2$O/Al$_2$O$_3$ = 10.75, $\delta$ = P$_2$O$_5$/Al$_2$O$_3$ = 0.00, $\varepsilon$ = H$_2$O/Al$_2$O$_3$ = 371.79, $\xi$ = H$_2$O/OH$^-$ = 19.08, and $\eta$ = R/Al$_2$O$_3$ = 0.00. The mixed gel was loaded to a 200-mL stainless autoclave with a fluororesin inner cylinder placed, and was subjected to hydrothermal synthesis at 100°C for 7 days without stirring, a product was subjected to filtration and dried at 120°C, and thereafter a powdered zeolite was obtained. Furthermore, there were not observed any peaks derived from other zeolite, amorphous silica-alumina and the like, and therefore the resulting zeolite was evaluated to be a high-purity GIS-type zeolite.

Each value was determined in the same manner as in Example 1, and thus SAR was 2.60, and Z was 0.188 and no carbon atom was detected by the $^{29}$Si-MAS-NMR spectrum. In addition, ICP-emission spectrochemical analysis was performed, and A/T was 0.00 (= K/T) and the potassium concentration K/Al in the zeolite was 0.00. The adsorption isotherm and the desorption isotherm of CO$_2$ were measured, thus the amount of adsorption at 760 mmHg was 8.1 cc/g and q(Ad)/q(De) was 0.812. The adsorption isotherm of CH$_4$ was measured in the same manner, and thus the amount of adsorption at 760 mmHg was 0.1 cc/g.

[Comparative Example 5]

102.57 g of water, 2.45 g of sodium hydroxide (produced by Junsei Chemical Co., Ltd.), 1.15 g of sodium aluminate (produced by Showa Chemical Industry Co., Ltd.) and 24.07 g of liquid glass (produced by FUJIFILM Wako Pure Chemical Corporation) were mixed, and stirred at 1800 rpm under a N$_2$ atmosphere for 24 hours, thereby preparing a mixed gel, based on the content of Non-Patent Literature 3. The composition of the mixed gel was as follows: $\alpha$ = E/Al$_2$O$_3$ = 0.00, $\beta$ = SiO$_2$/Al$_2$O$_3$ = 20.0, $\gamma$ = Na$_2$O/Al$_2$O$_3$ = 14.00, $\delta$ = P$_2$O$_5$/Al$_2$O$_3$ = 0.00, $\varepsilon$ = H$_2$O/Al$_2$O$_3$ = 840.00, $\xi$ = H$_2$O/OH- = 103.05, and $\eta$ = R/Al$_2$O$_3$ = 0.00. The mixed gel was subjected to hydrothermal synthesis at 100°C for 24 hours with stirring at 1000 rpm, a product was subjected to filtration and dried at 120°C, and thereafter a powdered GIS-type zeolite was obtained.

Each value was determined in the same manner as in Example 1, and thus SAR was 4.68, and Z was 0.155 and no carbon atom was detected by the $^{29}$Si-MAS-NMR spectrum. In addition, ICP-emission spectrochemical analysis was performed, and A/T was 0.00 (= K/T) and the potassium concentration K/Al in the zeolite was 0.00. The adsorption isotherm and the desorption isotherm of CO$_2$ were measured, thus the amount of adsorption at 760 mmHg was 9.8 cc/g and q(Ad)/q(De) was 0.788. The adsorption isotherm of CH$_4$ was measured in the same manner, and thus the amount of adsorption at 760 mmHg was 0.2 cc/g.

[Comparative Example 6]

17.6 g of sodium carbonate (Na$_2$CO$_3$, produced by FUJIFILM Wako Pure Chemical Corporation) was added to a product obtained by kneading 21.54 g of silicon dioxide (SiO$_2$, produced by FUJIFILM Wako Pure Chemical Corporation), 5.97 g of aluminum oxide (Al$_2$O$_3$, produced by FUJIFILM Wako Pure Chemical Corporation), 1.17 g of iron oxide (Fe$_2$O$_3$, produced by FUJIFILM Wako Pure Chemical Corporation), 0.27 g of titanium oxide (TiO$_2$, produced by FUJIFILM Wako Pure Chemical Corporation), 0.21 g of calcium oxide (CaO, produced by FUJIFILM Wako Pure Chemical Corporation), 0.06 g of magnesium oxide (MgO, produced by FUJIFILM Wako Pure Chemical Corporation), 0.03 g of sodium hydroxide, 0.21 g of potassium hydroxide, 0.05 g of phosphorus oxide (P$_2$O$_5$, produced by FUJIFILM Wako Pure Chemical Corporation), and 0.53 g of a carbon powder (produced by Strem Chemicals, Inc.) by an automatic mortar, and these were mixed and molten in an electric furnace at 1000°C for 1 hour, based on the content of Patent Literature 1. Thereafter, the molten product was cooled and pulverized, and 149.78 g of water was added so that the molar ratio of H$_2$O/Na$_2$O was 50, thereby preparing a mixed gel. The composition of the mixed gel was as follows: $\alpha$ = E/Al$_2$O$_3$ = 5.67, $\beta$ = SiO$_2$/Al$_2$O$_3$ = 6.12, $\gamma$ = Na$_2$O/Al$_2$O$_3$ = 2.84, $\delta$ = P$_2$O$_5$/Al$_2$O$_3$ = 0.00, $\varepsilon$ = H$_2$O/Al$_2$O$_3$ = 142.00, $\xi$ = H$_2$O/OH$^-$ = 1848.89, and $\eta$ = R/Al$_2$O$_3$ = 0.00. The mixed gel was heated in an autoclave at 100°C for 24 hours, a product was subjected to filtration and dried at 120°C, and thereafter a powdered GIS-type zeolite was obtained.

Each value was determined in the same manner as in Example 1, and thus SAR was 3.33, and Z was 0.273 and no carbon atom was detected by the $^{29}$Si-MAS-NMR spectrum. In addition, ICP-emission spectrochemical analysis was performed, and A/T was 0.00 (= K/T) and the potassium concentration K/Al in the zeolite was 0.00. The adsorption isotherm and the desorption isotherm of CO$_2$ were measured, thus the amount of adsorption at 760 mmHg was 2.4 cc/g and q(Ad)/q(De) was 0.043. The adsorption isotherm of CH$_4$ was measured in the same manner, and thus the amount of adsorption at 760 mmHg was 0.3 cc/g.

[Comparative Example 7]

0.55 g of sodium aluminate, 0.35 g of sodium metasilicate (Na2SiO3, produced by FUJIFILM Wako Pure Chemical Corporation), and 1.43 g of fumed silica (Aerosil 300, produced by Nippon Aerosil Co., Ltd.) were mixed with 10 cc of an aqueous 0.1 mol/L sodium hydroxide solution, thereby providing a mixed gel, based on the content of Non-Patent Literature 6. The composition of the mixed gel was as follows: $\alpha$ = $E/Al_2O_3$ = 0.00, $\beta$ = $SiO_2/Al_2O_3$ = 8.0, $\gamma$ = $Na_2O/Al_2O_3$ = 1.00, $\delta$ = $P_2O_5/Al_2O_3$ = 0.00, $\varepsilon$ = $H_2O/Al_2O_3$ = 166.00, $\xi$ = $H_2O/OH^-$ = 550.00, and $\eta$ = $R/Al_2O_3$ = 0.00. The mixed gel was placed in a stainless micro-bomb and heated at 200°C for 7 days, thereby synthesizing a zeolite.
Each value was determined in the same manner as in Example 1, and thus SAR was 6.94, and Z was 0.098 and no carbon atom was detected by the $^{29}$Si-MAS-NMR spectrum. In addition, ICP-emission spectrochemical analysis was performed, and A/T was 0.00 (= K/T) and the potassium concentration K/Al in the zeolite was 0.00. The adsorption isotherm and the desorption isotherm of $CO_2$ were measured, thus the amount of adsorption at 760 mmHg was 3.2 cc/g and q(Ad)/q(De) was 0.662. The adsorption isotherm of $CH_4$ was measured in the same manner, and thus the amount of adsorption at 760 mmHg was 0.1 cc/g.

[Comparative Example 8]

To a liquid where 18 g of sodium metasilicate pentahydrate ($Na_2O_3Si/5H_2O$, produced by Sigma-Aldrich) and 210.0 g of water were mixed was added 127.1 g of triethanolamine ($C_6H_{25}NO_3$, produced by Carl Roth GmbH + Co. KG), and stirred at 600 rpm for 30 minutes. To the liquid was added a liquid where 2.34 g of sodium hydroxide and 148.0 g of water were mixed, and stirred at room temperature and 600 rpm for 30 minutes, thereby providing a mixed liquid containing no Al, based on the content of Patent Literature 2. The composition of the mixed liquid was as follows: a = $E/Al_2O_3$ = 0.00, $\beta$ = $SiO_2/Al_2O_3$ = ∞, $\gamma$ = $Na_2O/Al_2O_3$ = ∞, $\delta$ = $P_2O_5/Al_2O_3$ = ∞, $\varepsilon$ = $H_2O/Al_2O_3$ = ∞, $\zeta$ = $H_2O/OH^-$ = ∞, and $\eta$ = $R/Al_2O_3$ = ∞. 1.134 g of an aluminum powder (Al, produced by Wako Pure Chemical Industries, Ltd.) was loaded to a 1000-mL stainless autoclave with a fluororesin inner cylinder placed, the mixed liquid was placed therein, and was subjected to hydrothermal synthesis at 95°C for 5 days with neither any aging period nor stirring, a product was subjected to filtration and dried at 120°C, and thereafter a powdered zeolite was obtained.
Each value was determined in the same manner as in Example 1, and thus SAR was 4.60, and Z was 0.153 and the carbon atom content was 13.5% by mass by the $^{29}$Si-MAS-NMR spectrum. In addition, ICP-emission spectrochemical analysis was performed, and A/T was 0.00 (= K/T) and the potassium concentration K/Al in the zeolite was 0.00. The adsorption isotherm and the desorption isotherm of $CO_2$ were measured, thus the amount of adsorption at 760 mmHg was 1.1 cc/g and q(Ad)/q(De) = 0.339. The adsorption isotherm of $CH_4$ was measured in the same manner, and thus the amount of adsorption at 760 mmHg was 0.1 cc/g.

[Comparative Example 9]

189.90 g of water, 8.17 g of aluminum isopropoxide, 17.37 g of tetraethyl orthosilicate (produced by Sigma-Aldrich), and 176.85 g of tetramethylammonium hydroxide pentahydrate (produced by Sigma-Aldrich) as the organic structure-directing agent were mixed, and stirred for 30 minutes, based on the content of Non-Patent Literature 5. The liquid was retained at 0°C for 1 hour, then stirred by a gyratory shaker for 20 hours, heated at 120°C for 33 minutes, and then cooled at 0°C for 15 minutes, thereby preparing a mixed gel. The composition of the mixed gel was as follows: $\alpha$ = $E/Al_2O_3$ = 0.00, $\beta$ = $SiO_2/Al_2O_3$ = 4.78, $\gamma$ = $Na_2O/Al_2O_3$ = 0.0, $\delta$ = $P_2O_5/Al_2O_3$ = 0.0, $\varepsilon$ = $H_2O/Al_2O_3$ = 253, $\xi$ = $H_2O/OH^-$ = 51.66, and $\eta$ = $R/Al_2O_3$ = 4.78. The mixed gel was subjected to hydrothermal synthesis at 100°C for 13 days, a product was subjected to filtration and dried at 120°C, and thereafter a powdered zeolite was obtained.
Each value was determined in the same manner as in Example 1, and thus SAR was 5.00, and Z was 0.150 and the carbon atom content was 13.2% by mass by the $^{29}$Si-MAS-NMR spectrum. In addition, ICP-emission spectrochemical analysis was performed, and A/T was 0.00 (= K/T) and the potassium concentration K/Al in the zeolite was 0.00. The adsorption isotherm and the desorption isotherm of $CO_2$ were measured, thus the amount of adsorption at 760 mmHg was 0.3 cc/g and q(Ad)/q(De) was 0.225. The adsorption isotherm of $CH_4$ was measured in the same manner, and thus the amount of adsorption at 760 mmHg was 0.3 cc/g.

[Comparative Example 10]

259.10 g of water, 0.98 g of sodium hydroxide, 20.50 g of sodium aluminate and 310.4 g of liquid glass No. 3 were mixed, and stirred for 45 minutes, thereby preparing a mixed gel, based on the content of Patent Literature 4. The composition of the mixed gel was as follows: $\alpha$ = $E/Al_2O_3$ = 0.00, $\beta$ = $SiO_2/Al_2O_3$ = 12.00, $\gamma$ = $Na_2O/Al_2O_3$ = 3.00, $\delta$ = $P_2O_5/Al_2O_3$ = 0.00, $\varepsilon$ = $H_2O/Al_2O_3$ = 200.00, $\xi$ = $H_2O/OH^-$ = 1009.8, and $\eta$ = $R/Al_2O_3$ = 0.00. The mixed gel was loaded to a 1000-mL stainless autoclave with a fluororesin inner cylinder placed, and was subjected to hydrothermal synthesis at 110°C for 2 days without stirring, a product was subjected to filtration and dried at 120°C, and thereafter a powdered zeolite was obtained.

1 g of the resulting zeolite was charged into 500 mL of an aqueous 0.1 N potassium nitrate solution, and stirred at 60°C and 400 rpm for 3 hours. A product was subjected to filtration and dried at 120°C, and thereafter a powdered zeolite where the cation was partially exchanged with potassium was obtained.

Each value was determined in the same manner as in Example 1, and thus SAR was 4.10, and Z was 0.128 and no carbon atom was detected by the $^{29}Si$-MAS-NMR spectrum. In addition, ICP-emission spectrochemical analysis was performed, and A/T was 0.97 (= K/T) and the potassium concentration K/Al in the zeolite was 0.97. The adsorption isotherm and the desorption isotherm of $CO_2$ were measured, thus the amount of adsorption at 760 mmHg was 67.5 cc/g and q(Ad)/q(De) was 0.157. The adsorption isotherm of $CH_4$ was measured in the same manner, and thus the amount of adsorption at 760 mmHg was 0.7 cc/g.

[Table 1]

| | Composition ratio of starting materials | | | | | | | SAR | Zeolite produced | | | CO₂ | | Amount [cc/g] of adsorption of $CH_4$ |
| | | | | | | | | | 29SiNMR | Content of K | Content of C | Amount of adsorption | Adsorption-desorption hysteresis | |
| | $\alpha$ | $\beta$ | $\gamma$ | $\sigma$ | $\varepsilon$ | $\zeta$ | $\eta$ | | Z=X/Y | K/Al | [% by mass] | Amount of adsorption at 100 kPa | q(Ad) / q(De) | [cc/g] |
|---|---|---|---|---|---|---|---|---|---|---|---|---|---|---|
| Example 1 | 4.53 | 8.17 | 3.99 | 0.00 | 431.0 | 376.7 | 0.00 | 6.90 | 0.305 | 0.00 | 0.00 | 82.2 | 0.984 | 6.2 |
| Example 2 | 4.86 | 8.17 | 3.99 | 0.00 | 431.2 | 527.8 | 0.00 | 6.90 | 0.220 | 0.98 | 0.00 | 84.0 | 1.000 | 0.0 |
| Example 3 | 4.85 | 14.0 | 5.16 | 0.00 | 379.3 | 120.0 | 0.00 | 10.1 | 0.519 | 0.00 | 0.00 | 800 | 1.000 | 7.2 |
| Example 4 | 0.88 | 14.0 | 2.62 | 0.00 | 242.4 | 120.0 | 0.00 | 8.20 | 0.356 | 0.16 | 0.00 | 72.7 | 0.991 | 0.5 |
| Example 5 | 2.66 | 12.4 | 6.10 | 0.00 | 197.9 | 90.2 | 0.00 | 3.40 | 0.192 | 0.11 | 0.00 | 51.2 | 0.978 | 0.8 |
| Comparative Example 1 | 0.00 | 8.17 | 9.23 | 0.00 | 431.0 | 377.0 | 0.00 | 6.90 | 0.190 | 0.00 | 0.00 | 78.1 | 0.386 | 3.5 |
| Comparative Example 2 | 0.00 | 100 | 2.50 | 0.00 | 2200 | 44.0 | 0.00 | 6.00 | 0.176 | 0.00 | 0.00 | 79.8 | 0.365 | 10.1 |
| Comparative Example 3 | 0.00 | 12.4 | 6.10 | 0.00 | 197.9 | 90.2 | 0.00 | 4.10 | 0.151 | 0.00 | 0.00 | 52.4 | 0.519 | 0.0 |
| Comparative Example 4 | 0.00 | 7.96 | 10.7 | 0.00 | 371.8 | 19.1 | 0.00 | 2.60 | 0.188 | 0.00 | 0.00 | 8.1 | 0.812 | 0.1 |
| Comparative Example 5 | 0.00 | 20.0 | 14.0 | 0.00 | 840.0 | 103.0 | 0.00 | 4.68 | 0.155 | 0.00 | 0.00 | 9.8 | 0.788 | 0.2 |
| Comparative Example 6 | 5.67 | 6.12 | 2.84 | 0.00 | 142.0 | 1848.9 | 0.00 | 3.33 | 0.273 | 0.00 | 0.00 | 2.4 | 0.043 | 0.3 |
| Comparative Example 7 | 0.00 | 8.00 | 1.00 | 0.00 | 166.0 | 550.0 | 0.00 | 6.94 | 0.098 | 0.00 | 0.00 | 3.2 | 0.662 | 0.1 |
| Comparative Example 8 | 0.00 | - | - | - | - | - | - | 4.60 | 0.153 | 0.00 | 13.50 | 1.1 | 0.339 | 0.1 |
| Comparative Example 9 | 0.00 | 4.78 | 0.00 | 0.00 | 253.0 | 51.7 | 4.78 | 5.00 | 0.150 | 0.00 | 13.21 | 0.3 | 0.225 | 0.3 |

EP 4 393 879 A1

(continued)

| | Composition ratio of starting materials | | | | | | | SAR | 29SiNMR | Zeolite produced | | CO$_2$ | | Amount of adsorption of CH$_4$ |
| | α | β | γ | σ | ε | ζ | η | | Z=X/Y | Content of K | Content of C | Amount of adsorption | Adsorption-desorption hysteresis | [cc/g] |
| | | | | | | | | | | K/Al | [% by mass] | Amount of adsorption at 100 kPa | q(Ad) / q(De) | [cc/g] |
| Comparative Example 10 | 0.00 | 12.0 | 3.00 | 0.00 | 2000 | 1009.8 | 0.00 | 4.10 | 0.128 | 0.97 | 0.00 | 67.5 | 0.157 | 0.7 |

In Table 1, $\alpha$ to $\xi$ each represent the following molar ratio.

$\alpha$ = E/Al$_2$O$_3$, (E represents the molar amount of the sum of cationic species generated by addition of the salt compound.)

$\beta$ = SiO$_2$/Al$_2$O$_3$,

$\gamma$ = (M1$_2$O+M2O)/Al$_2$O$_3$ (wherein M1 represents the alkali metal and M2 represents the alkaline earth metal),

$\delta$ = P$_2$O$_5$/Al$_2$O$_3$,

$\varepsilon$ = H$_2$O/Al$_2$O$_3$,

$\xi$ = H$_2$O/OH$^-$, and

$\eta$ = R/Al$_2$O$_3$ (R represents the organic structure-directing agent)

Industrial Applicability

The GIS-type zeolite according to the present invention has industrial applicability to separating agents or separation membranes for various gases and liquids, electrolyte membranes for fuel cells and the like, fillers of various resin molded articles, membrane reactors, catalysts for hydrocracking, alkylation and the like, catalyst carriers for carrying metals, metal oxides, and the like, adsorbents, desiccants, detergent aids, ion exchangers, waste water treatment agents, fertilizers, food additives, cosmetic additives, and the like.

Reference Signs Lists

1    adsorbent
2    container
3    filter
4    zeolite particle

**Claims**

1. A GIS-type zeolite, having a silica/alumina ratio of 3.40 or more, wherein
when area intensities of peaks assigned to Q4(3Al), Q4(2Al), Q4(1Al) and Q4(0Al) observed in a $^{29}$Si-MAS-NMR spectrum are respectively defined as a, b, c and d, (a + d)/(b + c) $\geq$ 0.192 is satisfied.

2. The GIS-type zeolite according to claim 1, comprising potassium as cationic species in the zeolite.

3. The GIS-type zeolite according to claim 2, wherein a ratio (K/Al) of an atomic percentage of potassium to an atomic percentage of aluminum in the zeolite is 0.05 or more.

4. The GIS-type zeolite according to claim 1, wherein a ratio (A/T) of a total value (A) of amount of substance of potassium and lithium to a total value (T) of amount of substance of alkali metals in the zeolite is 0.05 or more.

5. The GIS-type zeolite according to claim 1, having a carbon atom content of 4% by mass or less.

6. The GIS-type zeolite according to claim 1, comprising silica-alumina.

7. An adsorbing material comprising the GIS-type zeolite according to any of claims 1 to 6.

8. A separation method comprising separating one or more selected from the group consisting of CO$_2$, H$_2$O, He, Ne, Cl$_2$, NH$_3$, and HCl from a mixture including two or more gases selected from the group consisting of H$_2$, N$_2$, O$_2$, Ar, CO, and hydrocarbon, by use of the adsorbing material according to claim 7.

9. The separation method according to claim 8, wherein the gas separation is performed by a pressure swing-type adsorption-separation method, a temperature swing-type adsorption-separation method, or a pressure/temperature swing-type adsorption-separation method.

[Figure 1]

[Figure 2]

[Figure 3]

**EP 4 393 879 A1**

## INTERNATIONAL SEARCH REPORT

| International application No. |
|---|
| **PCT/JP2022/021932** |

### A. CLASSIFICATION OF SUBJECT MATTER

*C01B 39/02*(2006.01)i; *B01D 53/04*(2006.01)i; *B01D 53/047*(2006.01)i; *B01D 53/62*(2006.01)i; *B01J 20/18*(2006.01)i
FI: C01B39/02; B01D53/047; B01D53/04 220; B01D53/62; B01J20/18 A

According to International Patent Classification (IPC) or to both national classification and IPC

### B. FIELDS SEARCHED

Minimum documentation searched (classification system followed by classification symbols)

C01B39/02; B01D53/04; B01D53/047; B01D53/62; B01J20/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2019/202933 A1 (ASAHI KASEI KABUSHIKI KAISHA) 24 October 2019 (2019-10-24) claims, examples | 1-9 |
| A | WO 2018/110559 A1 (ASAHI KASEI KABUSHIKI KAISHA) 21 June 2018 (2018-06-21) claims, examples | 1-9 |
| A | KR 10-1444939 B1 (THE INDUSTRY & ACADEMIC COOPERATION IN CHUNGNAM NATIONAL UNIVERSITY (IAC)) 30 September 2014 (2014-09-30) claims | 1-9 |
| P, A | CHOI, Hyun June. Effect of framework Si/Al ratio on the mechanism of CO2 adsorption on the small-pore zeolite gismondine. Chemical Engineering Journal. 26 November 2021, 433 (2022) 133800, pp. 1-9 2. Materials and methods, 3. Results and discussion | 1-9 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **29 June 2022** | **12 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/021932**

| Patent document cited in search report | | | Publication date (day/month/year) | Patent family member(s) | | | Publication date (day/month/year) |
|---|---|---|---|---|---|---|---|
| WO | 2019/202933 | A1 | 24 October 2019 | US | 2020/0223706 | A1 | |
| | | | | claims, examples | | | |
| | | | | EP | 3712112 | A1 | |
| | | | | CN | 111051242 | A | |
| | | | | AU | 2019256941 | A | |
| | | | | CA | 3085838 | A | |
| | | | | BR | 112020010711 | A | |
| WO | 2018/110559 | A1 | 21 June 2018 | US | 2019/0039045 | A1 | |
| | | | | claims, examples | | | |
| | | | | AU | 2017329099 | A | |
| | | | | CN | 108495813 | A | |
| KR | 10-1444939 | B1 | 30 September 2014 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6340417 A
- JP 2012519148 A
- WO 2018110559 A
- WO 2019202933 A

### Non-patent literature cited in the description

- **MATTHEW D. OLEKSIAK ; ARIAN GHORBANPOUR ; MARLON T. CONATO ; B. PETER MCGRAIL ; LARS C. GRABOW ; RADHA KISHAN MOTKURI ; JEFFREY D. RIMER.** Synthesis Strategies for Ultrastable Zeolite GIS Polymorphs as Sorbents for Selective Separations. *Chem. Eur. J,* 2016, vol. 22, 16078-16088
- **PANKAJ SHARMA ; JEONG-GU YEO ; MOON HEE HAN ; CHURL HEE CHO.** Knobby surfaced, mesoporous, single-phase GIS-NaP1 zeolite microsphere synthesis and characterization for H2 gas adsorption. *J. Mater. Chem. A,* 2013, vol. 1, 2602-2612
- **PANKAJ SHARMA ; JEONG-GU YEO ; MOON HEE HAN ; CHURL HEE CHO.** GIS-NaP1 zeolite microspheres as potential water adsorption material: Influence of initial silica concentration on adsorptive and physical/topological properties. *Sci. Rep.,* 2016, vol. 6, 1-26
- **ARTURO J. HERNANDEZ-MALDONADO ; RALPH T. YANG ; DANIEL CHINN ; CURTIS L. MUNSON.** Partially Calcined Gismondine Type Silicoaluminophosphate SAPO-43: Isopropylamine Elimination and Separation of Carbon Dioxide, Hydrogen Sulfide, and Water. *Langmuir,* 2003, vol. 19, 2193-2200
- **JOHANN KECHT ; B. MIHAILOVA ; K. KARAGHIOSOFF ; S. MINTOVA ; THOMAS BEIN.** Nanosized Gismondine Grown in Colloidal Precursor Solutions. *Langmuir,* 2004, vol. 20, 5271-5276
- **ULF HAKANSSON ; LARS FALTH ; STAFFAN HANSEN.** Structure of a High-Silica Variety of Zeolite Na-P. *Acta Cryst.,* 1990, vol. C46, 1363-1364
- **HYUN JUNE CHOI ; JUNG GI MIN ; SANG HYUN AHN ; JIHO SHIN ; SUK BONG HONG ; SAMBHU RADHAKRISHNAN ; C. VINOD CHANDRAN ; ROBERT G. BELL ; ERIC BREYNAERT ; CHRISTINE E. A. KIRSCHHOCK.** Framework flexibility-driven CO2 adsorption on a zeolite. *Mater. Horiz,* 2020, 1528-1532